# EUROPEAN PATENT SPECIFICATION

(11) **EP 3 139 554 B1**
(45) Date of publication and mention of the grant of the patent: **07.08.2019**
(21) Application number: 14891148.0
(22) Date of filing: 06.05.2014
(51) Int. Cl.: H04L 12/803, H04W 28/08, H04W 88/08, H04W 88/12

(54) **MULTIFLOW TRANSMISSION METHOD AND DEVICE**
MEHRSTROMÜBERTRAGUNGSVERFAHREN UND -VORRICHTUNG
PROCÉDÉ ET DISPOSITIF DE TRANSMISSION MULTIFLUX

(43) Date of publication of application: 08.03.2017
(73) Proprietor: Huawei Technologies Co., Ltd., Longgang District Shenzhen, Guangdong 518129 (CN)
(72) Inventor: ZHANG, Wei, Shenzhen Guangdong 518129 (CN); PENG, Chenghui, Shenzhen Guangdong 518129 (CN)
(74) Representative: Epping - Hermann - Fischer
(86) International application number: PCT/CN2014/076843
(87) International publication number: WO 2015/168856

(56) References cited:
- EP-A1- 2 107 730
- EP-A2- 0 796 022
- WO-A1-99/45734
- WO-A1-2012/072118
- WO-A1-2014/038917
- WO-A2-2008/024057
- CN-A- 103 368 637
- CN-A- 103 532 869
- US-A1- 2009 069 014

## Description

### TECHNICAL FIELD

Embodiments of the present invention relate to the communications technologies, and in particular, to a multiflow transmission method and device.

### BACKGROUND

For a Long Term Evolution (LTE) network or an LTE-A standard, in the network, there are a packet data network gateway (PGW for short), a serving gateway (SGW for short), a mobility management entity (MME for short), and an evolved nodeB (eNodeB, for short eNB) that serve users.

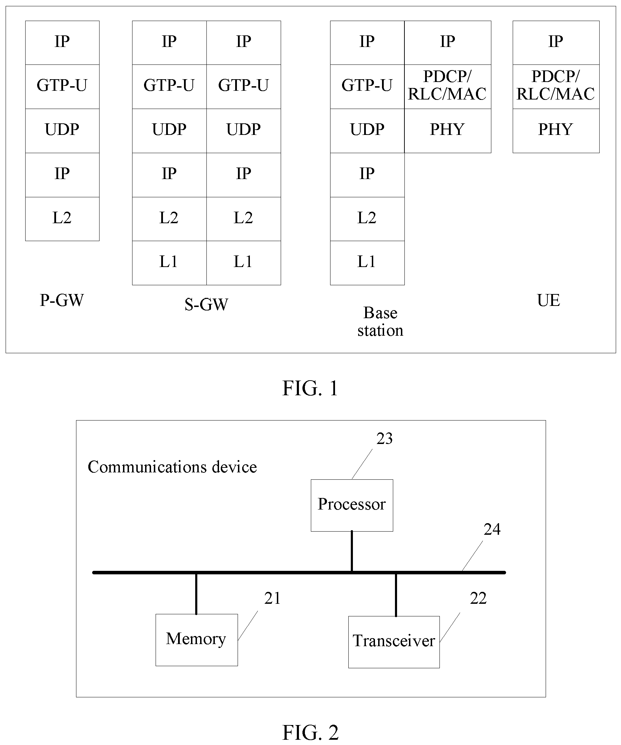

In an existing network, an architecture and functions are all relatively fixed functions, such as 3G/LTE, a protocol defines a set of data processing standard process, and a structure of a protocol stack is shown in FIG. 1.

For example, a data transmission process in the existing network is specifically: For downlink data, the data is routed by means of the Internet Protocol (Internet Protocol, IP for short) from an external network to a PGW to enter an operator network. In the operator network, the PGW encapsulates the data according to a location, on an SGW, at which the data stored on the PGW is located, and then sends the encapsulated data to the SGW; after decapsulating the received data, the SGW encapsulates the data according to the same processing logic, and sends the encapsulated data to a corresponding base station; and after decapsulating the received data, the base station performs air interface processing on the data, and then sends the data on which the air interface processing has been performed to user equipment (UE for short).

EP 2 107 730 A1 concerns a method for determining to which resource among plural resources, elements of a group of elements have to be allocated, each resource having a capacity to process elements of the group of elements within a time duration. The method allocates an element of the group of elements to the resource which has the highest capacity to process elements of the group of elements within the time duration; determines a revised capacity for each resource according to the capacity of the resource and elements allocated to the resource; and allocates a next element of the group of elements to the resource which has the highest revised capacity to process elements of the group of elements. For example, a telecommunication network may enable base stations BS1 to BS4 to be connected together if needed and enable the transfer between the base stations BS of at least a split of a flow of data intended to be transferred to a mobile terminal TE and/or enable the transfer between the base stations BS of at least a split of a flow of data transferred by a mobile terminal TE.

EP 0 796 022 A2 discloses a radio communications system having a mobile station and at least two base stations. ATM radio channels are provided between the remote station and base stations.

Each of the ATM channels supports communication though ATM cells over a common frequency band. At least one ATM node is coupled to the base stations. A base station controller is coupled to the ATM node. The base station controller has a combiner for combining cell streams received from the first and second base stations and an ATM signalling circuit for sending ATM commands to the ATM node for dividing cell streams at the ATM node to the first and second base stations. The remote station has a logic unit for combining cell streams received from the first and second base stations during a handoff from the first base station to the second base station.

In a future 5G era, transmission services are more diversified than now, such as a multi-party high-definition video, real-time 3D, medical treatment, and machine to machine (M2M for short) service, service characteristics are diversified, service requirements also differ more vastly, and a change range of network requirements is huge.

However, for a static network morphology in the prior art, only the same protocol stack can be used to support all services. Consequently, network resources cannot be properly used. For example, for a high-bandwidth and large-traffic video service and a small-packet M2M service, if a same processing process is used, neither data transmission nor processing matches, and then network resource utilization is reduced.

### SUMMARY

The invention made is disclosed in the set of independent claims attached. Further embodiments are disclosed in the set of dependent claims attached.

To overcome disadvantages in the prior art, embodiments of the present invention provide multiflow transmission methods and devices according to the attached claims, to improve network resource utilization.

It can be known from the claimed technical solutions that, in a multiflow transmission method and device of the embodiments of the present invention, a first base station divides a data stream into at least two sub-data streams according to a first control instruction, so that the first base station may continue to process one sub-data stream, and a second base station may continue to process another sub-data stream, which may implement offloading processing on the data stream, and then may improve network resource use efficiency, and also improve network resource processing efficiency.

### BRIEF DESCRIPTION OF DRAWINGS

FIG. 1 is a schematic diagram of a protocol stack defined in 3G/LTE in the prior art;
FIG. 2 is a schematic structural diagram of a communications device according to an example useful for understanding the present invention;
FIG. 3 is a schematic structural diagram of a communications device according to another example useful for understanding the present invention;
FIG. 4 is a schematic structural diagram of a control device according to an example useful for understanding the present invention;
FIG. 5 is a schematic structural diagram of a communications device according to another example useful for understanding the present invention;
FIG. 6 is a schematic structural diagram of a communications device according to another example useful for understanding the present invention;
FIG. 7 is a schematic structural diagram of a control device according to another example useful for understanding the present invention;
FIG. 8 is a schematic structural diagram of a communications device according to another example useful for understanding the present invention;
FIG. 9 is a schematic structural diagram of a communications device according to another example useful for understanding the present invention;
FIG. 10 is a schematic structural diagram of a control device according to another example useful for understanding the present invention;
FIG. 11 is a schematic structural diagram of a communications device according to another example useful for understanding the present invention;
FIG. 12 is a schematic structural diagram of a communications device according to another example useful for understanding the present invention;
FIG. 13 is a schematic structural diagram of a control device according to another example useful for understanding the present invention;
FIG. 14 is a schematic flowchart of a multiflow transmission method according to an example useful for understanding the present invention;
FIG. 15 is a schematic flowchart of a multiflow transmission method according to another example useful for understanding the present invention;
FIG. 16 is a schematic diagram of adaptive processing on a protocol stack of multiple cells according to an example useful for understanding the present invention;
FIG. 17A to FIG. 20 are schematic flowcharts of a multiflow transmission method according to another example useful for understanding the present invention; and
FIG. 21 is a schematic diagram of adaptive processing on a protocol stack of multiple cells according to another example useful for understanding the present invention.

### DESCRIPTION OF EXAMPLES USEFUL FOR UNDERSTANDING THE INVENTION

FIG. 2 is a schematic structural diagram of a communications device according to an example useful for understanding the present invention. As shown in FIG. 2, the communications device in this example may include: a memory 21, a transceiver 22 and a processor 23, where the processor 23, the memory 21 and the transceiver 22 may be connected by using a bus 24.

In this example, the memory 21 is configured to store an instruction, and the processor 23 is configured to execute the instruction;
the transceiver 22 is configured to receive a first control instruction generated by a controller, where the first control instruction is used to instruct the communications device to offload the data stream, and the data stream is processed by at least one protocol module of the communications device and then is offloaded;
the processor 23 is specifically configured to:
   divide the data stream into at least two sub-data streams according to the first control instruction,
   and continue to process one sub-data stream of the at least two sub-data streams according to the first control instruction; and
   the transceiver 22 is configured to separately send another sub-data stream of the at least two sub-data streams obtained by performing division by the processor to corresponding another communications device, so that the another communications device continues to process the another sub-data stream.

In a specific application, the transceiver 22 is further configured to send the sub-data stream processed by the processor 23 to user equipment (User Experience, UE for short).

For example, the first control instruction includes: an offloading policy; and
correspondingly, the processor 23 is specifically configured to divide the data stream into at least two sub-data streams according to the offloading policy.

The offloading policy in this example may include: information used to indicate that a data stream processed by a Packet Data Convergence Protocol PDCP module is offloaded, and information used to indicate that the data stream is offloaded according to a proportion and/or an absolute value of traffic of a sub-data stream carried by the communications device and/or a proportion and/or an absolute value of traffic of a sub-data stream carried by the another communications device;
or the offloading policy may include: information used to indicate that a data stream processed by a PDCP module is offloaded, and information used to indicate that the data stream is offloaded according to a proportion and/or an absolute value of a rate of a sub-data stream carried by the communications device and a proportion and/or an absolute value of a rate of a sub-data stream carried by the another communications device.

In an optional implementation manner, the processor 23 is specifically configured to divide the data stream into a first sub-data stream and a second sub-data stream according to the first control instruction; and
continue to process the first sub-data stream according to the first control instruction, and send the second sub-data stream to the corresponding another communications device.

For example, the first control instruction further includes: an encapsulation parameter used to encapsulate the second sub-data stream; and
in this case, the transceiver 22 is specifically configured to encapsulate the second sub-data stream according to the encapsulation parameter, and send the encapsulated second sub-data stream to the corresponding another communications device.

In this example, the encapsulation parameter may include: an Internet Protocol (Internet Protocol, IP for short) address of the another communications device.

Optionally, the encapsulation parameter further includes one or more of the following items:
a User Datagram Protocol (User Datagram Protocol, UDP for short) port of the another communications device, an application layer identifier of the another communications device, an application layer protocol indication of the another communications device, a virtual local area network (Virtual Local Area Network, VLAN for short) label of the data stream, or a Multiprotocol Label Switching (Multi-Protocol Label Switching, MPLS for short) label of the data stream.

In a second optional implementation manner, the transceiver 22 is further configured to receive the first control instruction sent by the controller.

It should be noted that, the controller herein may be a controller in a communications device, or the controller herein may be a separate controller of an independent communications device.

For example, the at least one protocol module of the foregoing communications device includes: the Packet Data Convergence Protocol (Packet Data Convergence Protocol, PDCP for short) module of the communications device, or a Radio Link Control (Radio Link Control, for short RLC) module of the communications device.

In a third optional implementation manner, the first control instruction may further include: an identifier of the data stream; and
the processor 23 is specifically configured to divide the data stream corresponding to the identifier of the data stream into at least two sub-data streams according to the first control instruction.

For example, the identifier of the data stream may include: an IP 5-tuple of the data stream, a VLAN label of the data stream, and/or an MPLS label of the data stream.

In a specific application, the foregoing first control instruction may include: the identifier of the data stream, the encapsulation parameter used to encapsulate the second sub-data stream, and the offloading policy.

The communications device in this example may be a primary serving cell of the corresponding UE.

The communications device in this example performs offloading processing on downlink data, and may effectively improve efficiency of processing the downlink data, which can improve a downlink transmission rate of UE, and then may improve network resource use efficiency.

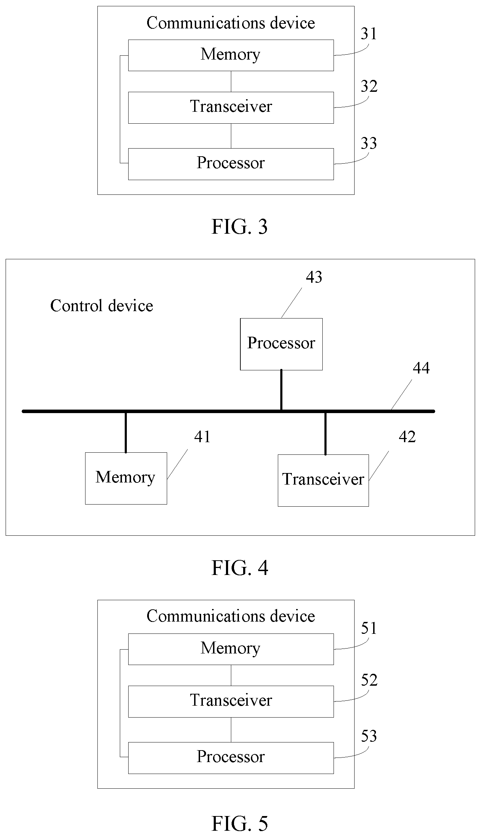

FIG. 3 is a schematic structural diagram of a communications device according to another example useful for understanding the present invention. As shown in FIG. 3, the communications device in this example may include: a memory 31, a transceiver 32 and a processor 33, where the memory 31 is configured to store an instruction, and the processor 33 is configured to execute the instruction;
the transceiver 32 is configured to: receive a second control instruction sent by a controller, and receive, according to the second control instruction, a second sub-data stream sent by another communications device, where the second control instruction is generated by the controller, and is used to instruct the communications device to continue to process the second sub-data stream;
the processor 33 is configured to continue to process the second sub-data stream according to the second control instruction received by the transceiver 32; and
the transceiver 32 is further configured to send the second sub-data stream that the processor 33 continues to process to UE.

In this example, the communications device may be a secondary serving cell of the UE, and the another communications device may be a primary serving cell of the UE. The controller may connect two communications devices.

For example, the second control instruction may include: an identifier used to identify the second sub-data stream; and
correspondingly, the transceiver 32 is specifically configured to: receive, according to the second control instruction, the encapsulated second sub-data stream sent by the another communications device, and decapsulate the encapsulated second sub-data stream by using the identifier used to identify the second sub-data stream, to obtain the decapsulated second sub-data stream.

In this example, the identifier used to identify the second sub-data stream includes one or more of the following items:
an IP address of the communications device, a UDP port of the communications device, an application layer identifier of the communications device, an application layer protocol indication of the communications device, a VLAN label of the data stream, or an MPLS label of the data stream.

It should be noted that, the identifier used to identify the second sub-data stream may be further understood as a decapsulation parameter for the second sub-data stream.

In an optional implementation manner, the transceiver 32 is further configured to: before the second sub-data stream is received, receive the second control instruction sent by the controller.

The communications device in this example as a secondary serving cell can assist a primary serving cell in processing downlink data, and then improve efficiency of processing the downlink data, and also improve network resource utilization.

FIG. 4 is a schematic structural diagram of a control device according to an example useful for understanding the present invention. As shown in FIG. 4, the control device in this example may include: a memory 41, a transceiver 42 and a processor 43, where the memory 41, the transceiver 42 and the processor 43 are connected by using a bus 44.

The memory 41 is configured to store an instruction, and the processor 43 is configured to execute the instruction, which specifically includes:
generating a first control instruction and a second control instruction according to an identifier of a data stream, channel quality of UE, a load resource of a communications device and a load resource of another communications device, where the first control instruction is used to instruct the communications device to offload the data stream, and the second control instruction is used to instruct the another communications device to continue to process the second sub-data stream; and the data stream is processed by at least one protocol module of the communications device and then is offloaded;
the transceiver 42 is configured to send the first control instruction generated by the processor 43 to the communications device, so that the communications device offloads the data stream according to the first control instruction; and
the transceiver 42 is further configured to send the second control instruction generated by the processor 43 to the another communications device, so that the another communications device continues to process a sub-data stream of the data stream according to the second control instruction.

The controller in this example may be located in the communications device, or exist independent of the communications device.

For example, the first control instruction includes one or more of the following items:
an offloading policy, an encapsulation parameter used to encapsulate a sub-data stream of the data stream, or the identifier of the data stream; and
the second control instruction includes one or more of the following items:
   an identifier used to identify a sub-data stream of the data stream, a processing rule of an RLC module in the another communications device, a processing rule of a Media Access Control (Medium/Media Access Control, MAC for short) module in the another communications device, or quality of service (Quality of Service, QoS for short) information of the data stream.

The foregoing encapsulation parameter may include: an IP address of the another communications device; or the foregoing encapsulation parameter further includes one or more of the following items:
a UDP port of the another communications device, an application layer identifier of the another communications device, an application layer protocol indication of the another communications device, a VLAN label of the data stream, or an MPLS label of the data stream.

The foregoing identifier of the data stream includes one or more of the following items:
an IP 5-tuple of the data stream, the VLAN label of the data stream, or the MPLS label of the data stream.

The identifier used to identify a sub-data stream of the data stream includes one or more of the following items: an IP address of the another communications device, the UDP port of the another communications device, the application layer identifier of the another communications device, the application layer protocol indication of the another communications device, the VLAN label of the data stream, or the MPLS label of the data stream.

In a specific application, the offloading policy may include: information used to indicate that a data stream processed by a PDCP module is offloaded, and information used to indicate that the data stream is offloaded according to a proportion and/or an absolute value of traffic of a sub-data stream carried by the communications device and/or a proportion and/or an absolute value of traffic of a sub-data stream carried by the another communications device;
or the offloading policy may include: information used to indicate that a data stream processed by a PDCP module is offloaded, and information used to indicate that the data stream is offloaded according to a proportion and/or an absolute value of a rate of a sub-data stream carried by the communications device and a proportion and/or an absolute value of a rate of a sub-data stream carried by the another communications device.

The control device of this example may generate a first control instruction and a second control instruction when a primary serving cell receives a data stream, so that the primary serving cell and a secondary serving cell assist in processing downlink data. Then, efficiency of processing the downlink data is improved. Meanwhile, a transmission rate of the downlink data is improved, and network resource utilization is improved.

In this example, the foregoing control device and the foregoing communications device may be separate and in a communication connection, and the control device controls the communications device to process communication data. The foregoing separation may be physical separation, or may refer to logical separation between virtual devices.

It should be noted that, the control device may make the communications device execute a standard action sequence, or may make the communications device execute an action sequence described in this application. The action sequence is specifically an ordered set of processing actions of processing the communication data in a protocol stack, the communication data can be sequentially processed according to a sequence of the processing actions in the ordered set, and the foregoing standard processing action sequence is specifically an ordered set of processing actions in a protocol stack in the prior art, for example, a protocol stack in an LTE network.

Further, a granularity of a processing action sequence may be configured according to a need of a user. For example, a PDCP action is split according to a requirement of a user, to form a processing action sequence of an action Robust Header Compression Protocol (Robust Header Compression, ROHC for short), an action Security, an action RLC, an action MAC, and an action Physical Layer Protocol (Physical, PHY for short), for another example, the RLC is distinguished according to a mode, to form a processing action sequence of an action ROCH, an action Security, an action RLC-AM (RLC acknowledged mode), an action MAC, and an action PHY.

The control device may determine a corresponding control instruction according to a filter template in the control device, that is, an IP 5-tuple. For example, the standard processing action sequence is: action A-action B-action C, that is, a packet is first processed by using the action A, then processed by using the action B, and finally processed by using the action C. Then, if a processing action sequence corresponding to the IP 5-tuple is a processing action sequence ABSC, that is, action A-action B-action S-action C, the control device can determine a corresponding control instruction, that is, an insertion instruction of inserting the action S between the action B and the action C.

Then, the control device sends the IP 5-tuple and the foregoing insertion instruction to the communications device, such as the first control instruction or the second control instruction described above.

Then, the communications device adjusts, according to the control instruction, the standard processing action sequence stored in the communications device, that is, inserts the action S between the action B and the action C, to form the foregoing processing action sequence corresponding to the IP 5-tuple.

Then, the communications device begins to receive a data stream, parses each packet starting from receiving a first packet of the data stream, and performs matching between the IP 5-tuple and a characteristic in the packet. When the IP 5-tuple matches the characteristic in the packet, the communications device uses the processing action sequence ABSC as a processing action sequence corresponding to the packet.

Finally, the communications device processes the foregoing packet according to the processing action sequence ABSC.

FIG. 5 is a schematic structural diagram of a communications device according to another example useful for understanding the present invention. As shown in FIG. 5, the communications device in this example may include: a memory 51, a transceiver 52 and a processor 53, where the memory 51 is configured to store an instruction, and the processor 53 is configured to execute the instruction;
the transceiver 52 is configured to receive a third control instruction generated by a controller, where the third control instruction is used to instruct the communications device to perform convergence processing on a third sub-data stream and a fourth sub-data stream;
the transceiver 52 is further configured to receive, according to the received third control instruction, the fourth sub-data stream sent by another communications device, where the fourth sub-data stream is a sub-data stream processed by at least one protocol module of the another communications device; and
the processor 53 is configured to converge, according to the third control instruction received by the transceiver 52, the third sub-data stream and the fourth sub-data stream that is received by the transceiver 52, and continue to process a converged data stream, where the third sub-data stream is a sub-data stream processed by at least one protocol module of the communications device.

For example, the third control instruction may include: an identifier used to identify the fourth sub-data stream; and
correspondingly, the transceiver 52 is specifically configured to: receive, according to the received third control instruction, the encapsulated fourth sub-data stream sent by the another communications device, and perform decapsulation processing on the encapsulated fourth sub-data stream by using the identifier used to identify the fourth sub-data stream, to obtain the decapsulated fourth sub-data stream.

Optionally, the identifier used to identify the fourth sub-data stream includes one or more of the following items: an IP address of the communications device, a UDP port of the communications device, an application layer identifier of the communications device, an application layer protocol indication of the communications device, a VLAN label of the fourth sub-data stream, or an MPLS label of the fourth sub-data stream.

In this example, the foregoing third control instruction further includes: an identifier of the fourth sub-data stream and an identifier of the third sub-data stream; and
correspondingly, the processor 53 is specifically configured to converge the third sub-data stream corresponding to the identifier of the third sub-data stream and the fourth sub-data stream corresponding to the identifier of the fourth sub-data stream according to the third control instruction received by the transceiver 52.

For example, the identifier of the third sub-data stream includes one or more of the following items: an IP 5-tuple of the third sub-data stream, a VLAN label of the third sub-data stream, or an MPLS label of the third sub-data stream; and
the identifier of the fourth sub-data stream includes one or more of the following items: an IP 5-tuple of the fourth sub-data stream, a VLAN label of the fourth sub-data stream, or an MPLS label of the fourth sub-data stream.

In a specific application process, the third control instruction may include: an identifier used to identify the fourth sub-data stream, the identifier of the fourth sub-data stream, the identifier of the third sub-data stream, or information used to indicate that sub-data streams processed by an RLC module are converged. In this example, only an example is used to describe information about the third control instruction, but does not limit the information included in the third control instruction.

It should be noted that, the at least one protocol module of the communications device includes:
a PDCP module of the communications device, and/or an RLC module of the communications device; and
the at least one protocol module of the another communications device includes: a PDCP module of the another communications device, and/or an RLC module of the another communications device.

The communications device and the another communications device in this example perform assistant processing, so that the user equipment may perform uplink transmission from multiple base stations, which then effectively improves uplink transmission efficiency of the user equipment, and radio resources of the multiple base stations are shared, so as to improve utilization of wireless network resources.

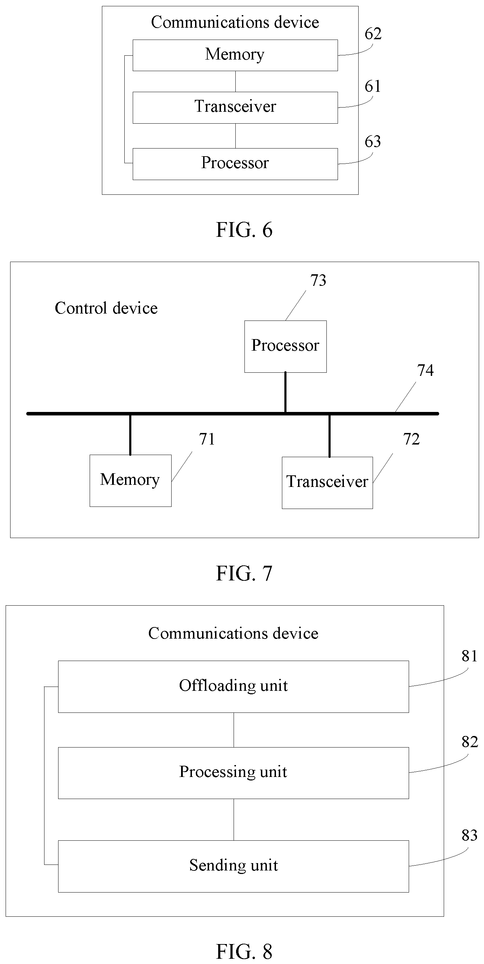

FIG. 6 is a schematic structural diagram of a communications device according to another example useful for understanding the present invention. As shown in FIG. 6, the communications device in this example may include: a transceiver 61, a memory 62 and a processor 63, where
the transceiver 61 is configured to receive a fourth control instruction generated by a controller, where the fourth control instruction is used to instruct the communications device to send a fourth sub-data stream processed by at least one protocol module of the communications device to another communications device; and
the transceiver 61 is further configured to send the fourth sub-data stream to the another communications device according to the fourth control instruction, so that the another communications device performs convergence processing on the fourth sub-data stream and a third sub-data stream, where the third sub-data stream is a sub-data stream processed by at least one protocol module of the another communications device.

In this example, the fourth control instruction includes: information used to indicate that sub-data streams processed by an RLC module are converged, and an encapsulation parameter used to encapsulate the fourth sub-data stream; and
the transceiver 61 is specifically configured to: encapsulate the fourth sub-data stream by using the encapsulation parameter and according to the information used to indicate that the sub-data streams processed by the RLC module are converged, where the information is in the received fourth control instruction, and send the encapsulated fourth sub-data stream to the another communications device.

For example, the encapsulation parameter may include: an IP address of the another communications device, or the encapsulation parameter may further include one or more of the following items: a UDP port of the another communications device, an application layer identifier of the another communications device, an application layer protocol indication of the another communications device, a VLAN label of the fourth sub-data stream, or an MPLS label of the fourth sub-data stream.

Moreover, the fourth control instruction further includes: an identifier of the fourth sub-data stream; and
correspondingly, the transceiver 61 is specifically configured to send the fourth sub-data stream corresponding to the identifier of the fourth sub-data stream to the another communications device according to the received third control instruction.

In this example, the identifier of the fourth sub-data stream may include one or more of the following items:
an IP 5-tuple of the fourth sub-data stream, a VLAN label of the fourth sub-data stream, or an MPLS label of the fourth sub-data stream.

In a specific application process, the fourth control instruction may include: the information used to indicate that the sub-data streams processed by the Radio Link Control RLC module are converged, an encapsulation parameter used to encapsulate the fourth sub-data stream, and the identifier of the fourth sub-data stream. In this example, only an example is used for description.

Additionally, the at least one protocol module of the foregoing communications device may include: a PDCP module of the communications device, and/or an RLC module of the communications device; and the at least one protocol module of the another communications device may include: a PDCP module of the another communications device, and/or an RLC module of the another communications device.

The communications device and the another communications device in this example perform assistant processing, so that the user equipment may perform uplink transmission from multiple base stations, which then effectively improves uplink transmission efficiency of the user equipment, and radio resources of the multiple base stations are shared, so as to improve utilization of wireless network resources.

FIG. 7 is a schematic structural diagram of a control device according to another example useful for understanding the present invention. As shown in FIG. 7, the control device in this example may include: a memory 71, a transceiver 72 and a processor 73, where the memory 71, the transceiver 72 and the processor 73 are connected by using a bus 74.

In this example, the memory 71 is configured to store an instruction, and the processor 73 is configured to execute the instruction, which specifically includes:
generating a third control instruction and a fourth control instruction according to an identifier of a third sub-data stream, an identifier of a fourth sub-data stream, channel quality of UE, a load resource of a communications device and a load resource of another communications device, where the third control instruction is used to instruct the communications device to perform convergence processing on the third sub-data stream and the fourth sub-data stream, and the fourth control instruction is used to instruct the another communications device to send the fourth sub-data stream processed by at least one protocol module of the another communications device to the communications device;
the transceiver 72 is configured to send the fourth control instruction generated by the processor 71 to the another communications device, so that the another communications device sends the fourth sub-data stream to the communications device according to the fourth control instruction; and
the transceiver 72 is further configured to send the third control instruction generated by the processor 71 to the communications device, so that the communications device performs convergence processing on the third sub-data stream and the fourth sub-data stream according to the third control instruction, where the third sub-data stream is a sub-data stream processed by at least one protocol module of the communications device.

For example, the third control instruction may include one or more of the following items: information used to indicate that sub-data streams processed by an RLC module are converged, an identifier used to identify the fourth sub-data stream, the identifier of the third sub-data stream, or the identifier of the fourth sub-data stream; and
the fourth control instruction includes one or more of the following items: the information used to indicate that the sub-data streams processed by the RLC module are converged, an encapsulation parameter used to encapsulate the fourth sub-data stream, or the identifier of the fourth sub-data stream.

In a specific application, the encapsulation parameter may include: an IP address of the communications device, and the encapsulation parameter further includes one or more of the following items: a UDP port of the communications device, an application layer identifier of the communications device, an application layer protocol indication of the communications device, a VLAN label of the fourth sub-data stream, or an MPLS label of the fourth sub-data stream.

The identifier used to identify the fourth sub-data stream includes one or more of the following items:
the IP address of the communications device, the UDP port of the communications device, the application layer identifier of the communications device, the application layer protocol indication of the communications device, the VLAN label of the fourth sub-data stream, or the MPLS label of the fourth sub-data stream.

Optionally, the identifier of the third sub-data stream includes one or more of the following items: an IP 5-tuple of the third sub-data stream, a VLAN label of the third sub-data stream, or an MPLS label of the third sub-data stream; and
the identifier of the fourth sub-data stream includes one or more of the following items: an IP 5-tuple of the fourth sub-data stream, a VLAN label of the fourth sub-data stream, or an MPLS label of the fourth sub-data stream.

The control device in this example may be located in the communications device, or may be set independent of the communications device.

The control device in this example delivers a control instruction to the communications device and the another communications device, so that the communications device and the another communications device perform assistant processing. Therefore, the user equipment may perform uplink transmission from multiple base stations, which then effectively improves uplink transmission efficiency of the user equipment, and radio resources of the multiple base stations are shared, so as to improve utilization of wireless network resources.

FIG. 8 is a schematic structural diagram of a communications device according to another example useful for understanding the present invention. As shown in FIG. 8, the communications device in this example includes: an offloading unit 81, a processing unit 82 and a sending unit 83, where
the offloading unit 81 is configured to divide a data stream into at least two sub-data streams according to the first control instruction, where the first control instruction is generated by a controller, and is used to instruct the communications device to offload the data stream, and the data stream is processed by at least one protocol module of the communications device and then is offloaded;
the processing unit 82 is configured to continue to process, according to the first control instruction, one sub-data stream of the at least two sub-data streams obtained by performing division by the offloading unit; and
the sending unit 83 is configured to separately send another sub-data stream of the at least two sub-data streams obtained by performing division by the offloading unit 81 to corresponding another communications device, so that the another communications device continues to process the another sub-data stream; and send the sub-data stream processed by the processing unit to user equipment UE.

In this example, the first control instruction includes: an offloading policy; and
specifically, the offloading unit 81 is specifically configured to divide the data stream into at least two sub-data streams according to the offloading policy.

For example, the offloading policy may be: offloading the data stream according to a proportion and/or an absolute value of traffic of a sub-data stream carried by the communications device and/or a proportion and/or an absolute value of traffic of a sub-data stream carried by the another communications device;
or the offloading policy may be: offloading the data stream according to a proportion and/or an absolute value of a rate of a sub-data stream carried by the communications device and a proportion and/or an absolute value of a rate of a sub-data stream carried by the another communications device.

In an optional implementation manner, the offloading unit 81 is specifically configured to divide the data stream into a first sub-data stream and a second sub-data stream according to the first control instruction;
the processing unit 82 is specifically configured to continue to process, according to the first control instruction, the first sub-data stream obtained by performing division by the offloading unit 81; and
the sending unit 83 is specifically configured to send the second sub-data stream obtained by performing division by the offloading unit 81 to the corresponding another communications device.

In a specific application process, the first control instruction includes: an encapsulation parameter used to encapsulate the second sub-data stream; and
the sending unit 83 is specifically configured to encapsulate, according to the encapsulation parameter, the second sub-data stream obtained by performing division by the offloading unit, and send the encapsulated second sub-data stream to the corresponding another communications device.

For example, the encapsulation parameter includes: an IP address of the another communications device, and
the encapsulation parameter further includes one or more of the following items: a UDP port of the another communications device, an application layer identifier of the another communications device, an application layer protocol indication of the another communications device, a VLAN label of the data stream, or an MPLS label of the data stream.

In another optional implementation manner, the communications device further includes a receiving unit 84 not shown in the figure, where the receiving unit 84 is configured to: before the offloading unit 81, receive the first control instruction sent by the controller.

Optionally, the at least one protocol module of the communications device includes: a PDCP module of the communications device, and/or an RLC module of the communications device.

Additionally, the first control instruction may further include: an identifier of the data stream; and in this case, the offloading unit 81 is specifically configured to divide the data stream corresponding to the identifier of the data stream into at least two sub-data streams according to the first control instruction.

For example, the identifier of the data stream includes: an IP 5-tuple of the data stream, a VLAN label of the data stream, and/or an MPLS label of the data stream.

The communications device of this example may implement offloading on a downlink data stream, which then improves a transmission rate of the downlink data, and also improves utilization of wireless network resources.

Additionally, in a specific application, the communications device may include: a receiving unit, an offloading unit, a processing unit and a sending unit, where the receiving unit is configured to receive a first control instruction generated by the controller, where the first control instruction is used to instruct the communications device to offload the data stream, and the data stream is processed by at least one protocol module of the communications device and then is offloaded;
the offloading unit is configured to divide the data stream into at least two sub-data streams according to the first control instruction;
the processing unit is configured to continue to process, according to the first control instruction, one sub-data stream of the at least two sub-data streams obtained by performing division by the offloading unit; and
the sending unit is configured to separately send another sub-data stream of the at least two sub-data streams obtained by performing division by the offloading unit to corresponding another communications device, so that the another communications device continues to process the another sub-data stream; and send the sub-data stream processed by the processing unit to UE.

For example, the first control instruction may include: the offloading policy, the encapsulation parameter used to encapsulate the second sub-data stream, and the identifier of the data stream;
correspondingly, the offloading unit is specifically configured to divide the data stream corresponding to the identifier of the data stream into at least two sub-data streams according to the offloading policy; and
the sending unit is specifically configured to:
   encapsulate, according to the encapsulation parameter, the second sub-data stream obtained by performing division by the offloading unit, and send the encapsulated second sub-data stream to the corresponding another communications device.

Optionally, the offloading policy includes: information used to indicate that a data stream processed by a Packet Data Convergence Protocol PDCP module is offloaded; and
information used to indicate that the data stream is offloaded according to a proportion and/or an absolute value of traffic of a sub-data stream carried by the communications device and/or a proportion and/or an absolute value of traffic of a sub-data stream carried by the another communications device;
or the offloading policy may include: information used to indicate that a data stream processed by a PDCP module is offloaded; and
information used to indicate that the data stream is offloaded according to a proportion and/or an absolute value of a rate of a sub-data stream carried by the communications device and a proportion and/or an absolute value of a rate of a sub-data stream carried by the another communications device.

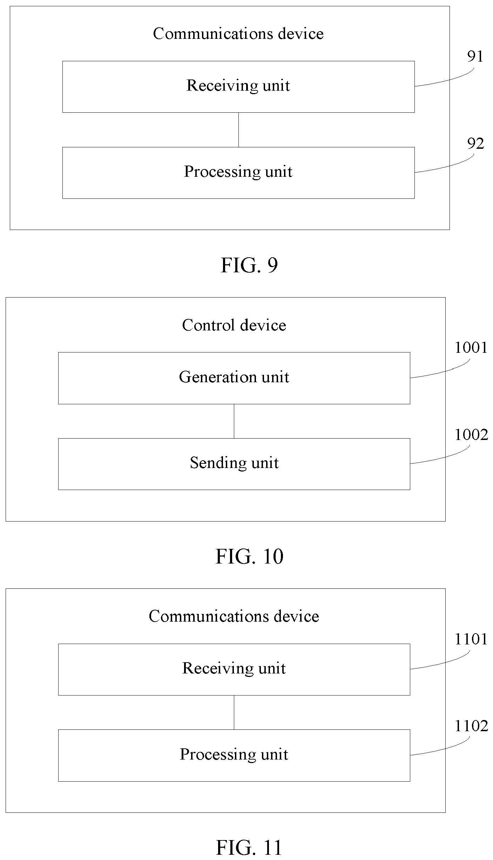

FIG. 9 is a schematic structural diagram of a communications device according to another example useful for understanding the present invention. As shown in FIG. 9, the communications device in this example may include: a receiving unit 91 and a processing unit 92, where
the receiving unit 91 is configured to receive: receive a second control instruction sent by a controller, and receive, according to the second control instruction, a second sub-data stream sent by another communications device, where the second control instruction is generated by the controller, and is used to instruct the communications device to continue to process the second sub-data stream; and
the processing unit 92 is configured to continue to process, according to the second control instruction, the second sub-data stream received by the receiving unit 91.

In an optional implementation manner, the communications device further includes a sending unit 93 not shown in the figure, where
the sending unit 93 is configured to send the second sub-data stream processed by the processing unit 92 to UE.

It should be noted that, in a specific application, the foregoing communications device may include: the receiving unit 91, the processing unit 92 and the sending unit 93 that are described above.

In this example, the second control instruction may include: an identifier used to identify the second sub-data stream; and
correspondingly, the receiving unit 91 is specifically configured to: receive, according to the second control instruction, the encapsulated second sub-data stream sent by the another communications device, and decapsulate the encapsulated second sub-data stream by using the identifier used to identify the second sub-data stream, to obtain the decapsulated second sub-data stream.

For example, the identifier used to identify the second sub-data stream includes one or more of the following items: an IP address of the communications device, a UDP port of the communications device, an application layer identifier of the communications device, an application layer protocol indication of the communications device, a virtual local area network VLAN label of the data stream, or a Multiprotocol Label Switching MPLS label of the data stream.

In a specific application process, the receiving unit 91 is further configured to: before the second sub-data stream is received, receive the second control instruction sent by the controller.

The communications device in this example as a secondary serving cell can assist a primary serving cell in processing downlink data, and then improve efficiency of processing the downlink data, and also improve network resource utilization.

FIG. 10 is a schematic structural diagram of a control device according to another example useful for understanding the present invention. As shown in FIG. 10, the control device in this example may include: a generation unit 1001 and a sending unit 1002, where
the generation unit 1001 is configured to generate a first control instruction and a second control instruction according to an identifier of a data stream, channel quality of user equipment UE, a load resource of a communications device and a load resource of another communications device, where the first control instruction is used to instruct the communications device to offload the data stream, and the second control instruction is used to instruct the another communications device to continue to process the second sub-data stream; and the data stream is processed by at least one protocol module of the communications device and then is offloaded; and
the sending unit 1002 is configured to send the first control instruction generated by the generation unit 1001 to the communications device, so that the communications device offloads the data stream according to the first control instruction; and
send the second control instruction generated by the generation unit 1001 to the another communications device, so that the another communications device continues to process a sub-data stream of the data stream according to the second control instruction.

In this example, the first control instruction includes one or more of the following items: an offloading policy, an encapsulation parameter used to encapsulate a sub-data stream of the data stream, or the identifier of the data stream.

For example, the offloading policy includes: information used to indicate that a data stream processed by a Packet Data Convergence Protocol PDCP module is offloaded; and
information used to indicate that the data stream is offloaded according to a proportion and/or an absolute value of traffic of a sub-data stream carried by the communications device and/or a proportion and/or an absolute value of traffic of a sub-data stream carried by the another communications device; and
optionally, the offloading policy may include: information used to indicate that a data stream processed by a PDCP module is offloaded; and
information used to indicate that the data stream is offloaded according to a proportion and/or an absolute value of a rate of a sub-data stream carried by the communications device and a proportion and/or an absolute value of a rate of a sub-data stream carried by the another communications device.

The second control instruction includes one or more of the following items:
an identifier used to identify a sub-data stream of the data stream, a processing rule of an RLC module in the another communications device, a processing rule of a MAC module in the another communications device, or QOS information of the data stream.

Optionally, the encapsulation parameter may include: an IP address of the another communications device; the encapsulation parameter may further include one or more of the following items: a UDP port of the another communications device, an application layer identifier of the another communications device, an application layer protocol indication of the another communications device, a virtual local area network VLAN label of the data stream, or a Multiprotocol Label Switching MPLS label of the data stream;
the identifier of the data stream may include one or more of the following items: an IP 5-tuple of the data stream, the VLAN label of the data stream, or the MPLS label of the data stream; and
the identifier used to identify a sub-data stream of the data stream includes one or more of the following items:
   an IP address of the another communications device, the UDP port of the another communications device, the application layer identifier of the another communications device, the application layer protocol indication of the another communications device, the VLAN label of the data stream, or the MPLS label of the data stream.

The control device of this example may generate a first control instruction and a second control instruction when a primary serving cell receives a data stream, so that the primary serving cell and a secondary serving cell assist in processing downlink data. Then, efficiency of processing the downlink data is improved. Meanwhile, a transmission rate of the downlink data is improved, and network resource utilization is improved.

FIG. 11 is a schematic structural diagram of a communications device according to an example useful for understanding the present invention. As shown in FIG. 11, the communications device in this example may include: a receiving unit 1101 and a processing unit 1102, where
the receiving unit 1101 is configured to receive a third control instruction generated by a controller, where the third control instruction is used to instruct the communications device to perform convergence processing on a third sub-data stream and a fourth sub-data stream;
the receiving unit 1101 is further configured to receive, according to the received third control instruction, the fourth sub-data stream sent by another communications device, where the fourth sub-data stream is a sub-data stream processed by at least one protocol module of the another communications device; and
the processing unit 1102 is configured to converge, according to the third control instruction received by the receiving unit 1101, the third sub-data stream and the fourth sub-data stream that is received by the receiving unit 1101, and continue to process a converged data stream, where the third sub-data stream is a sub-data stream processed by at least one protocol module of the communications device.

In this example, the third control instruction includes: an identifier used to identify the fourth sub-data stream; and
the receiving unit 1101 is specifically configured to: receive, according to the third control instruction, the encapsulated fourth sub-data stream sent by the another communications device, and perform decapsulation processing on the encapsulated fourth sub-data stream by using the identifier used to identify the fourth sub-data stream, to obtain the decapsulated fourth sub-data stream.

Optionally, the identifier used to identify the fourth sub-data stream includes one or more of the following items: an IP address of the communications device, a UDP port of the communications device, an application layer identifier of the communications device, an application layer protocol indication of the communications device, a VLAN label of the fourth sub-data stream, or an MPLS label of the fourth sub-data stream.

Additionally, the third control instruction further includes: an identifier of the fourth sub-data stream and an identifier of the third sub-data stream; and
the processing unit 1102 is specifically configured to converge the third sub-data stream corresponding to the identifier of the third sub-data stream and the fourth sub-data stream corresponding to the identifier of the fourth sub-data stream according to the third control instruction received by the receiving unit 1101.

For example, the identifier of the third sub-data stream includes one or more of the following items: an IP 5-tuple of the third sub-data stream, a VLAN label of the third sub-data stream, or an MPLS label of the third sub-data stream; and
the identifier of the fourth sub-data stream includes one or more of the following items: an IP 5-tuple of the fourth sub-data stream, a VLAN label of the fourth sub-data stream, or an MPLS label of the fourth sub-data stream.

In a specific application process, the foregoing third control instruction may include: the identifier used to identify the fourth sub-data stream, the identifier of the fourth sub-data stream, and the identifier of the third sub-data stream.

It should be noted that, the at least one protocol module of the communications device includes: a Packet Data Convergence Protocol PDCP module of the communications device, and/or a Radio Link Control RLC module of the communications device; and
the at least one protocol module of the another communications device includes: a PDCP module of the another communications device, and/or an RLC module of the another communications device.

The communications device and the another communications device in this example perform assistant processing, so that the user equipment may perform uplink transmission from multiple base stations, which then effectively improves uplink transmission efficiency of the user equipment, and radio resources of the multiple base stations are shared, so as to improve utilization of wireless network resources.

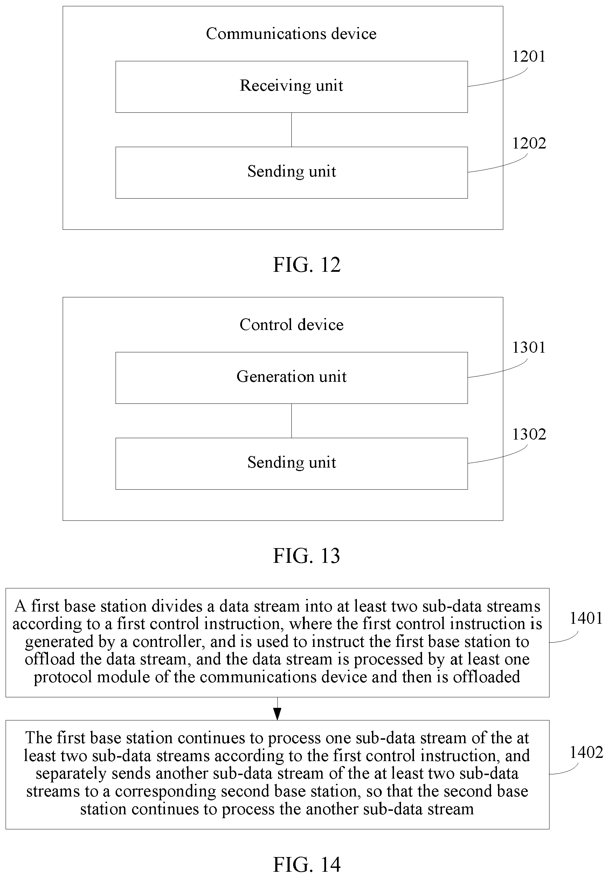

FIG. 12 is a schematic structural diagram of a communications device according to another example useful for understanding the present invention. As shown in FIG. 12, the communications device in this example may include: a receiving unit 1201 and a sending unit 1202, where
the receiving unit 1201 is configured to receive a fourth control instruction generated by a controller, where the fourth control instruction is used to instruct the communications device to send a fourth sub-data stream processed by at least one protocol module of the communications device to another communications device; and
the sending unit 1202 is configured to send the fourth sub-data stream to the another communications device according to the fourth control instruction received by the receiving unit 1201, so that the another communications device performs convergence processing on the fourth sub-data stream and a third sub-data stream, where the third sub-data stream is a sub-data stream processed by at least one protocol module of the another communications device.

In this example, the fourth control instruction includes: information used to indicate that sub-data streams processed by an RLC module are converged, and an encapsulation parameter used to encapsulate the fourth sub-data stream; and
the sending unit 1202 is specifically configured to encapsulate the fourth sub-data stream by using the encapsulation parameter and according to the information used to indicate that the sub-data streams processed by the RLC module are converged, where the information is in the fourth control instruction received by the receiving unit 1201, and send the encapsulated fourth sub-data stream to the another communications device.

For example, the encapsulation parameter may include: an Internet Protocol IP address of the another communications device; or the encapsulation parameter further includes one or more of the following items: a UDP port of the another communications device, an application layer identifier of the another communications device, an application layer protocol indication of the another communications device, a VLAN label of the fourth sub-data stream, or an MPLS label of the fourth sub-data stream.

In this example, the fourth control instruction further includes: an identifier of the fourth sub-data stream; and
correspondingly, the sending unit 1202 is specifically configured to send the fourth sub-data stream corresponding to the identifier of the fourth sub-data stream to the another communications device according to a third control instruction received by the receiving unit 1201.

For example, the identifier of the fourth sub-data stream includes one or more of the following items: an IP 5-tuple of the fourth sub-data stream, a VLAN label of the fourth sub-data stream, or an MPLS label of the fourth sub-data stream.

In a specific application process, the foregoing fourth control instruction may include: the information used to indicate that the sub-data streams processed by the RLC module are converged, an encapsulation parameter used to encapsulate the fourth sub-data stream, and the identifier of the fourth sub-data stream. In this example, only an example is used for description, but does not limit content of the fourth control instruction.

It should be noted that, the at least one protocol module of the another communications device includes:
a PDCP module of the another communications device, and/or an RLC module of the another communications device; and
the at least one protocol module of the communications device includes: a PDCP module of the communications device, and/or an RLC module of the communications device.

The communications device and the another communications device in this example perform assistant processing, so that the user equipment may perform uplink transmission from multiple base stations, which then effectively improves uplink transmission efficiency of the user equipment, and radio resources of the multiple base stations are shared, so as to improve utilization of wireless network resources.

FIG. 13 is a schematic structural diagram of a control device according to another example useful for understanding the present invention. As shown in FIG. 13, the control device in this example may include: a generation unit 1301 and a sending unit 1302, where
the generation unit 1301 is configured to generate a third control instruction and a fourth control instruction according to an identifier of a third sub-data stream, an identifier of a fourth sub-data stream, channel quality of user equipment UE, a load resource of a communications device and a load resource of another communications device, where the third control instruction is used to instruct the communications device to perform convergence processing on the third sub-data stream and the fourth sub-data stream, and the fourth control instruction is used to instruct the another communications device to send the fourth sub-data stream processed by at least one protocol module of the another communications device to the communications device; and
the sending unit 1302 is configured to send the fourth control instruction generated by the generation unit 1301 to the another communications device, so that the another communications device sends the fourth sub-data stream to the communications device according to the fourth control instruction; and
send the third control instruction generated by the generation unit to the communications device, so that the communications device performs convergence processing on the third sub-data stream and the fourth sub-data stream according to the third control instruction, where the third sub-data stream is a sub-data stream processed by at least one protocol module of the communications device.

In this example, the third control instruction includes one or more of the following items: information used to indicate that sub-data streams processed by an RLC module are converged, an identifier used to identify the fourth sub-data stream, the identifier of the third sub-data stream, or the identifier of the fourth sub-data stream; and
the fourth control instruction includes one or more of the following items: the information used to indicate that the sub-data streams processed by the RLC module are converged, an encapsulation parameter used to encapsulate the fourth sub-data stream, or the identifier of the fourth sub-data stream.

For example, the encapsulation parameter may include: an IP address of the communications device, and
the encapsulation parameter further includes one or more of the following items: a UDP port of the communications device, an application layer identifier of the communications device, an application layer protocol indication of the communications device, a VLAN label of the fourth sub-data stream, or an MPLS label of the fourth sub-data stream; and
the identifier used to identify the fourth sub-data stream includes one or more of the following items: the IP address of the communications device, the UDP port of the communications device, the application layer identifier of the communications device, the application layer protocol indication of the communications device, the VLAN label of the fourth sub-data stream, or the MPLS label of the fourth sub-data stream.

For example, the identifier of the third sub-data stream includes one or more of the following items: an IP 5-tuple of the third sub-data stream, a VLAN label of the third sub-data stream, or an MPLS label of the third sub-data stream; and
the identifier of the fourth sub-data stream includes one or more of the following items: an IP 5-tuple of the fourth sub-data stream, a VLAN label of the fourth sub-data stream, or an MPLS label of the fourth sub-data stream.

The control device in this example delivers a control instruction to the communications device and the another communications device, so that the communications device and the another communications device perform assistant processing. Therefore, the user equipment may perform uplink transmission from multiple base stations, which then effectively improves uplink transmission efficiency of the user equipment, and radio resources of the multiple base stations are shared, so as to improve utilization of wireless network resources.

In the following examples, a first base station may be a primary serving cell corresponding to user equipment, a second base station may be a secondary serving cell corresponding to the user equipment, and the following descriptions are all made by using the first base station and the second base station.

FIG. 14 is a schematic flowchart of a multiflow transmission method according to an example useful for understanding the present invention. As shown in FIG. 14, the multiflow transmission method of this example is described as follows:
1401: A first base station divides a data stream into at least two sub-data streams according to a first control instruction, where the first control instruction is generated by a controller, and is used to instruct the first base station to offload the data stream, and the data stream is processed by at least one protocol module of the communications device and then is offloaded.

In this example, the first control instruction may be generated by the controller according to an identifier of the data stream, channel quality of UE, a load resource of the first base station, and a load resource of a second base station, and is used to offload the data stream processed by the at least one protocol module of the first base station.

For example, the data stream processed by the at least one protocol module of the first base station may include: PDCP of the first base station, or RLC of the first base station.

1402: The first base station continues to process one sub-data stream of the at least two sub-data streams according to the first control instruction, and separately sends another sub-data stream of the at least two sub-data streams to a corresponding second base station, so that the second base station continues to process the another sub-data stream.

It should be noted that, when the data stream is not yet processed by the at least one protocol module of the first base station, the first base station receives the first control instruction sent by the controller.

The first control instruction in this example may include one or more of the following: an offloading policy, an encapsulation parameter used to encapsulate another sub-data stream, the identifier of the data stream or the like. In this example, only an example is used to describe the parameter included in the first control instruction, which is not limited in a specific application.

For example, the foregoing step 1401 of dividing, by the first base station, the data stream into at least two sub-data streams according to the first control instruction may include:
dividing, by the first base station, the data stream into at least two sub-data streams according to the offloading policy.

Generally, the first base station may divide the data stream into a first sub-data stream and a second sub-data stream according to the first control instruction; and
in this case, step 1402 may be specifically: the first base station continues to process the first sub-data stream according to the first control instruction, and sends the second sub-data stream to the corresponding second base station, so that the second base station continues to process the another sub-data stream.

In this example, the foregoing offloading policy may be: offloading the data stream according to a proportion and/or an absolute value of traffic of a sub-data stream carried by the first base station and/or a proportion and/or an absolute value of traffic of a sub-data stream carried by the second base station;
or the foregoing offloading policy may include: information used to indicate that a data stream processed by a PDCP module is offloaded, and offloading the data stream according to a proportion and/or an absolute value of a rate of a sub-data stream carried by the first base station and a proportion and/or an absolute value of a rate of a sub-data stream carried by the second base station.

In another example, the offloading policy may further include: information used to indicate that a data stream processed by a Packet Data Convergence Protocol PDCP module is offloaded; and performing offloading according to a proportion of total traffic of packets in a data stream/performing offloading according to a fixed rate of total traffic of packets in a data stream.

It should be noted that, a procedure in which the first base station acquires the data stream process is not repetitive with a procedure in which the first base station processes one sub-data stream of the at least two sub-data streams.

Optionally, the foregoing method may further include the following step 1403 not shown in the figure:
1403: The first base station sends the sub-data stream that the first base station continues to process to the UE.

It should be noted that, when the data stream is divided into the first sub-data stream and the second sub-data stream, the first control instruction may include: an encapsulation parameter used to encapsulate the second sub-data stream; and
correspondingly, step 1402 of sending the second sub-data stream to the corresponding second base station may be specifically: encapsulating, by the first base station, the second sub-data stream according to the encapsulation parameter, and sending the encapsulated second sub-data stream to the corresponding second base station, so that the second base station continues to process the second sub-data stream, and sends the processed second sub-data stream to the UE.

The encapsulation parameter may include: an IP address of the second base station; or the encapsulation parameter may include one or more of the following items: an IP address of the second base station, a UDP port, an application layer identifier, an application layer protocol indication, a VLAN label of the data stream, or an MPLS label of the data stream.

It should be noted that, the offloading in this example is for a data stream of downlink data from a base station to the user equipment. The data stream of the downlink data includes multiple packets.

The identifier of the foregoing data stream includes: an IP 5-tuple of the data stream, a VLAN label of the data stream, and/or an MPLS label of the data stream.

In a specific application, the foregoing first control instruction may further include a filter template of the data stream, an offloading indication, an identifier of the second base station, an indication of encapsulating the second sub-data stream and the like. In this example, only an example is used for description, but does not limit specific content included in the first control instruction.

Moreover, in the foregoing example, the first base station may be a primary serving cell corresponding to the user equipment, and the second base station may be a secondary serving cell corresponding to the user equipment.

In a specific application process, the multiflow transmission method of this example may include the following steps not shown in the figure:
S01: A first base station receives a first control instruction generated by a controller, where the first control instruction is used to instruct the first base station to offload the data stream, and the data stream is processed by at least one protocol module of the communications device and then is offloaded.
S02: The first base station divides the data stream into at least two sub-data streams according to the first control instruction, continues to process one sub-data stream of the at least two sub-data streams according to the first control instruction, and separately sends another sub-data stream of the at least two sub-data streams to a corresponding second base station, so that the second base station continues to process the another sub-data stream.
S03: The first base station sends the sub-data stream that the first base station continues to process to UE.

For example, the first control instruction includes: the offloading policy, the encapsulation parameter used to encapsulate the second sub-data stream, and/or the identifier of the data stream.

The offloading policy in this example includes: information used to indicate that a data stream processed by a PDCP module is offloaded; and
information used to indicate that the data stream is offloaded according to a proportion and/or an absolute value of traffic of a sub-data stream carried by the first base station and/or a proportion and/or an absolute value of traffic of a sub-data stream carried by the second base station;
   or
the offloading policy includes: information used to indicate that a data stream processed by a PDCP module is offloaded; and
information used to indicate that the data stream is offloaded according to a proportion and/or an absolute value of a rate of a sub-data stream carried by the first base station and a proportion and/or an absolute value of a rate of a sub-data stream carried by the second base station.

In the multiflow transmission method of this example useful for understanding the present invention, a first base station divides a data stream into at least two sub-data streams according to a first control instruction, so that the first base station may continue to process one sub-data stream, and a second base station may continue to process another sub-data stream, which may implement offloading processing on the data stream, and then may improve a downlink transmission rate of user equipment, improve network resource use efficiency, and also improve network resource processing efficiency.

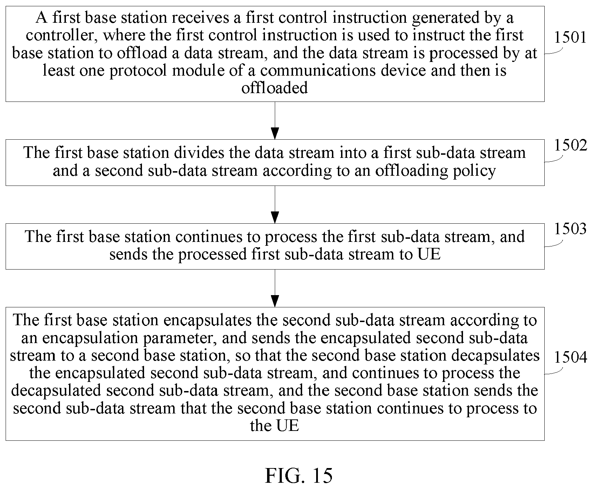

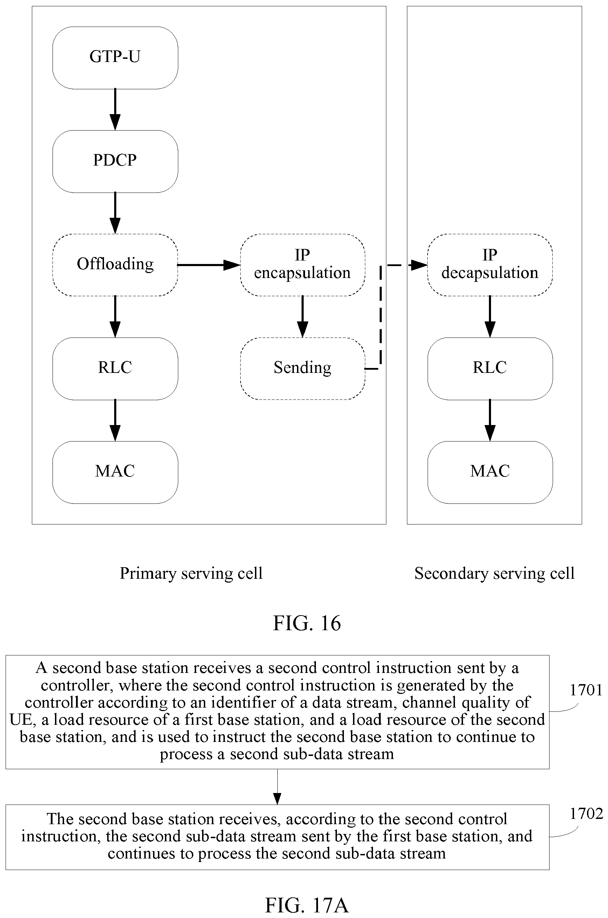

FIG. 15 is a schematic flowchart of a multiflow transmission method according to another example useful for understanding the present invention. FIG. 16 is a schematic diagram of adaptive processing on a protocol stack of multiple cells according to an example useful for understanding the present invention, with reference to FIG. 15 and FIG. 16, the multiflow transmission method of this example is described as follows:
1501: A first base station receives a first control instruction generated by the controller, where the first control instruction is used to instruct the first base station to offload the data stream, and the data stream is processed by at least one protocol module of the communications device and then is offloaded.

In this example, the first base station may receive the first control instruction when the data stream is received, where the first control instruction may include: an offloading policy, an encapsulation parameter used to encapsulate a second sub-data stream, and an identifier of the data stream.

The offloading policy in this example is performing offloading according to a proportion of a packet in the data stream. The encapsulation parameter includes: an IP address of the second base station; the identifier of the data stream includes: an IP 5-tuple of the data stream, a VLAN label of the data stream, and an MPLS label of the data stream.

1502: The first base station divides the data stream into a first sub-data stream and a second sub-data stream according to the offloading policy.

For example, the offloading policy includes: information used to indicate that a data stream processed by a Packet Data Convergence Protocol PDCP module is offloaded; and information used to indicate that the data stream is offloaded according to a proportion and/or an absolute value of traffic of a sub-data stream carried by the first base station and/or a proportion and/or an absolute value of traffic of a sub-data stream carried by the second base station. Alternatively, in another example, the offloading policy includes: information used to indicate that a data stream processed by a PDCP module is offloaded; and information used to indicate that the data stream is offloaded according to a proportion and/or an absolute value of a rate of a sub-data stream carried by the first base station and a proportion and/or an absolute value of a rate of a sub-data stream carried by the second base station. The offloading policy is described by only using an example in this example, and may be set according to an actual need in another example.

1503: The first base station continues to process the first sub-data stream, and sends the processed first sub-data stream to UE.

1504: The first base station encapsulates the second sub-data stream according to the encapsulation parameter, and sends the encapsulated second sub-data stream to the second base station, so that the second base station decapsulates the encapsulated second sub-data stream, and continues to process the decapsulated second sub-data stream, and the second base station sends the second sub-data stream that the second base station continues to process to the UE.

In a specific application, a tagging operation may be performing on the encapsulated second sub-data stream, the second sub-data stream is tagged with an MPLS label or a VLAN label, and then the second sub-data stream may be forwarded by using a network port, so as to be forwarded to the second base station. The MPLS label or the VLAN label is used by the second base station to identify the second sub-data stream.

Optionally, the second base station may receive, according to the second control instruction, the second sub-data stream sent by the first base station, and the second control instruction is generated by the controller, and is used to instruct the second base station to continue to process the second sub-data stream; and
the second base station continues to process the second sub-data stream according to the second control instruction, and sends the second sub-data stream that the second base station continues to process to the UE.

It should be noted that, a procedure in which the first base station acquires the data stream process is not repetitive with a procedure in which the first base station processes one sub-data stream of the at least two sub-data streams.

Therefore, in the multiflow transmission method of this example useful for understanding the present invention, a first base station divides a data stream into at least two sub-data streams according to a first control instruction, so that the first base station may continue to process one sub-data stream, and a second base station may continue to process another sub-data stream, which may implement offloading processing on the data stream, and then may improve a transmission rate of downlink data of user equipment, improve network resource use efficiency, and also improve network resource processing efficiency.

In another optional implementation manner, an example useful for understanding the present invention further provides a multiflow transmission method not shown in the figure, where the method includes the following steps:
A01: A second base station receives a second control instruction sent by a controller, and receives, according to the second control instruction, a second sub-data stream sent by a first base station, where the second control instruction is generated by the controller, and is used to instruct the second base station to continue to process the second sub-data stream.
A02: The second base station continues to process the second sub-data stream according to the second control instruction.
A03: The second base station sends the second sub-data stream that the second base station continues to process to UE.

In this example, the second control instruction includes: an identifier used to identify the second sub-data stream; and correspondingly, the foregoing step of receiving, by the second base station according to the second control instruction, a second sub-data stream sent by a first base station includes:
receiving, by the second base station according to the second control instruction, the encapsulated second sub-data stream sent by the first base station, and decapsulating the encapsulated second sub-data stream by using the identifier used to identify the second sub-data stream, to obtain the decapsulated second sub-data stream.

For example, the identifier used to identify the second sub-data stream includes one or more of the following items:
an IP address of the second base station, a UDP port of the second base station, an application layer identifier of the second base station, an application layer protocol indication of the second base station, a VLAN label of the data stream, or an MPLS label of the data stream.

In the multiflow transmission method of this example, the second base station cooperates with the first base station, so as to implement offloading processing on a data stream, which then may improve network resource use efficiency, and also improve network resource processing efficiency.

FIG. 17A shows a multiflow transmission method according to another example useful for understanding the present invention. As shown in FIG. 17A, the multiflow transmission method of this example is described as follows:
1701: A second base station receives a second control instruction sent by a controller, where the second control instruction is generated by the controller according to an identifier of a data stream, channel quality of UE, a load resource of a first base station, and a load resource of the second base station, and is used to instruct the second base station to continue to process the second sub-data stream.

For example, the data stream is a data stream processed by at least one protocol module of the first base station. The data stream processed by the at least one protocol module of the first base station may be: a data stream processed by a PDCP module of the first base station.

1702: The second base station receives, according to the second control instruction, the second sub-data stream sent by the first base station, and continues to process the second sub-data stream.

The second sub-data stream may be a sub-data stream acquired by the first base station from the data stream according to the first control instruction.

Optionally, after step 1702, the foregoing multiflow transmission method may further include the following step 1703 not shown in the figure:
1703: The second base station sends the sub-data stream that the second base station continues to process to the UE.

For example, the foregoing second control instruction may include: an identifier used to identify the second sub-data stream; and
in this case, the foregoing step 1702 may be the following step 1702' not shown in the figure:
1702': The second base station receives, according to the second control instruction, the encapsulated second sub-data stream sent by the first base station, and decapsulates the encapsulated second sub-data stream by using the identifier used to identify the second sub-data stream, to obtain the decapsulated second sub-data stream, and continues to process the decapsulated second sub-data stream.

In this example, the identifier used to identify the second sub-data stream includes one or more of the following items: an IP address of the second base station, a UDP port of the second base station, an application layer identifier of the second base station, or an application layer protocol indication of the second base station.

In this example, a procedure in which the second base station acquires the second sub-data stream is not repetitive with a procedure in which the first base station processes the data stream.

It can be understood that, if the data stream is a data stream processed by the PDCP module in the first base station, the second sub-data stream may be processed sequentially by an RLC module and a Media Access Control (Medium/Media Access Control, MAC for short) module in the second base station, and is not processed by the PDCP module again.

In the multiflow transmission method of this example, the second base station cooperates with the first base station, so as to implement offloading processing on a data stream, which then may improve network resource use efficiency, and also improve network resource processing efficiency.

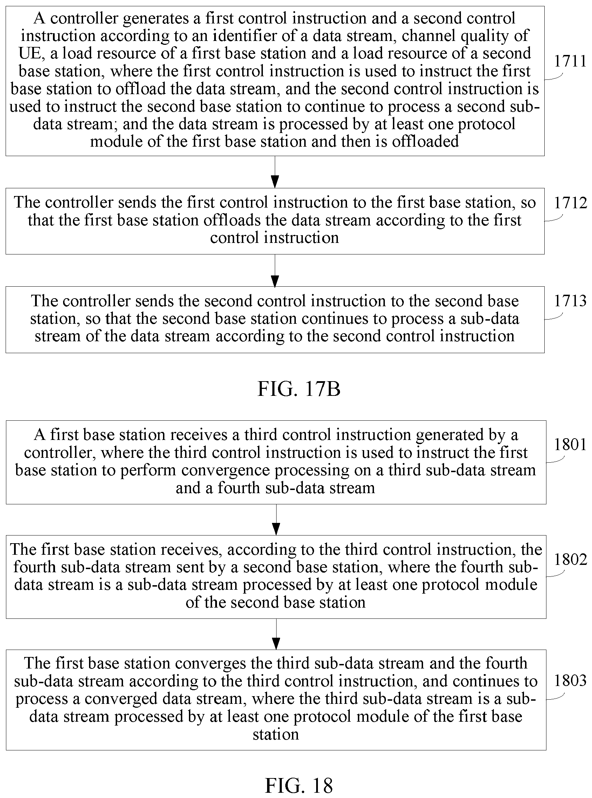

FIG. 17B shows a multiflow transmission method according to another example useful for understanding the present invention. As shown in FIG. 17B, the multiflow transmission method of this example is described as follows:
1711: A controller generates a first control instruction and a second control instruction according to an identifier of a data stream, channel quality of UE, a load resource of a first base station and a load resource of a second base station, where the first control instruction is used to instruct the first base station to offload the data stream, and the second control instruction is used to instruct the second base station to continue to process the second sub-data stream; and the data stream is processed by at least one protocol module of the first base station and then is offloaded.
1712: The controller sends the first control instruction to the first base station, so that the first base station offloads the data stream according to the first control instruction.
1713: The controller sends the second control instruction to the second base station, so that the second base station continues to process a sub-data stream of the data stream according to the second control instruction.

In this example, the first control instruction may include one or more of the following items:
an offloading policy, an encapsulation parameter used to encapsulate a sub-data stream of the data stream, or the identifier of the data stream; and
the second control instruction may include one or more of the following items:
   an identifier used to identify a sub-data stream of the data stream, a processing rule of an RLC module in the second base station, a processing rule of a MAC module in the second base station, or QOS information of the data stream.

For example, the encapsulation parameter includes: an IP address of the second base station;
the encapsulation parameter further includes one or more of the following items: a UDP port of the second base station, an application layer identifier of the second base station, an application layer protocol indication of the second base station, a VLAN label of the data stream, or an MPLS label of the data stream;
the identifier of the data stream includes one or more of the following items: an IP 5-tuple of the data stream, the VLAN label of the data stream, and/or the MPLS label of the data stream; and
the identifier used to identify a sub-data stream of the data stream includes one or more of the following items:
   an IP address of the second base station, the UDP port of the second base station, the application layer identifier of the second base station, the application layer protocol indication of the second base station, the VLAN label of the data stream, or the MPLS label of the data stream.

The foregoing offloading policy may include: information used to indicate that a data stream processed by a Packet Data Convergence Protocol PDCP module is offloaded; and information used to indicate that the data stream is offloaded according to a proportion and/or an absolute value of traffic of a sub-data stream carried by the first base station and/or a proportion and/or an absolute value of traffic of a sub-data stream carried by the second base station;
or the foregoing offloading policy may include: information used to indicate that a data stream processed by a PDCP module is offloaded, and information used to indicate that the data stream is offloaded according to a proportion and/or an absolute value of a rate of a sub-data stream carried by the first base station and a proportion and/or an absolute value of a rate of a sub-data stream carried by the second base station.

For example, the first control instruction sent by the controller may include the following information:
Filter Insert pdcp split (2)
Filter append split[1] ip_encap (ip, port) push label output
where Filter indicates the identifier of the data stream on which multiflow transmission needs to be performed.

The second control instruction sent by the controller includes the following information:
Filter ip_decap RLC MAC PHY.

Specifically, the controller delivers the second control instruction to the second base station, performs decapsulation processing on the second sub-data stream that matches a particular IP 5-tuple or a designated label 1, and performs a processing process of the corresponding RLC module (for example, configures an RLC processing rule) and a scheduling processing process of the MAC module (for example, configures MAC scheduling QoS information, or a priority).

In the multiflow transmission method of this example, a controller sends a first control instruction to a first base station and sends a second control instruction to a second base station, so that the second base station receives a second sub-data stream sent by the first base station, and continues to process the second sub-data stream, which may implement cooperative processing on a data stream by the first base station and the second base station, improve network resource use efficiency, and also improve network resource processing efficiency.

FIG. 18 shows a multiflow transmission method according to another example useful for understanding the present invention. As shown in FIG. 18, the multiflow transmission method of this example is described as follows:
1801: A first base station receives a third control instruction generated by a controller, where the third control instruction is used to instruct the first base station to perform convergence processing on a third sub-data stream and a fourth sub-data stream.
1802: The first base station receives, according to the third control instruction, the fourth sub-data stream sent by a second base station, where the fourth sub-data stream is a sub-data stream processed by at least one protocol module of the second base station.
1803: The first base station converges the third sub-data stream and the fourth sub-data stream according to the third control instruction, and continues to process a converged data stream, where the third sub-data stream is a sub-data stream processed by at least one protocol module of the first base station.

The third sub-data stream is a sub-data stream processed by the at least one protocol module of the first base station, and the fourth sub-data stream is a sub-data stream processed by the at least one protocol module of the second base station.

That is, a convergence process in this example may be specifically understood as: convergence processing is to place, in a same buffer, packets in data streams received from two ingresses, which is implemented by means of processing logic of a same first base station, and the first base station may process the converged data stream that is considered as data entering from a same ingress.

For example, the third control instruction in the foregoing step 1801 may include: an identifier used to identify the fourth sub-data stream.

The identifier used to identify the fourth sub-data stream may include: an IP address of the first base station; or includes one or more of the following items: an IP address of the first base station, a UDP port of the first base station, an application layer identifier of the first base station, an application layer protocol indication of the first base station, a virtual local area network VLAN label of the fourth sub-data stream, or a Multiprotocol Label Switching MPLS label of the fourth sub-data stream.

Correspondingly, step 1802 may specifically be the following step 1802' not shown in the figure: 1802': The first base station receives, according to the third control instruction, the encapsulated fourth sub-data stream sent by the second base station, and performs decapsulation processing on the encapsulated fourth sub-data stream by using the identifier used to identify the fourth sub-data stream, to obtain the decapsulated fourth sub-data stream.

Optionally, the third control instruction may further include: an identifier of the third sub-data stream and an identifier of the fourth sub-data stream, where the identifier of the third sub-data stream includes: an IP 5-tuple of the third sub-data stream, a VLAN label of the third sub-data stream, and/or an MPLS label of the third sub-data stream; and
the identifier of the fourth sub-data stream includes: an IP 5-tuple of the fourth sub-data stream, a VLAN label of the fourth sub-data stream, and/or an MPLS label of the fourth sub-data stream.

In this case, the foregoing step 1803 may be the following step 1803' not shown in the figure: Converge the third sub-data stream corresponding to the identifier of the third sub-data stream and the fourth sub-data stream corresponding to the identifier of the fourth sub-data stream.

It should be noted that, a procedure in which the first base station processes the converged data stream is not repetitive with a procedure in which the first base station acquires the third sub-data stream.

For example, if the first base station obtains the third sub-data stream after processing of an RLC module of the first base station, the first base station may continue to perform processing of a PDCP module of the first base station on the converged data stream.

The third sub-data stream may be a sub-data stream processed by the RLC module in the first base station, and the fourth sub-data stream may be a sub-data stream processed by an RLC module in the second base station.

In a specific application, the third control instruction may further include: a filter module of a second data stream, a convergence indication and the like.

Optionally, the foregoing third control instruction may include: the identifier used to identify the fourth sub-data stream, the identifier of the fourth sub-data stream, and the identifier of the third sub-data stream.

In the multiflow transmission method of this example, a first base station receives, according to a third control instruction, a fourth sub-data stream sent by a second base station, and then performs convergence processing on a third sub-data stream of the first base station and the fourth sub-data stream of the second base station, so that user equipment may perform uplink transmission from multiple base stations, which effectively improves an uplink transmission rate of the user equipment, and radio resources of the multiple base stations are shared, which effectively improves efficiency of using wireless network resources.

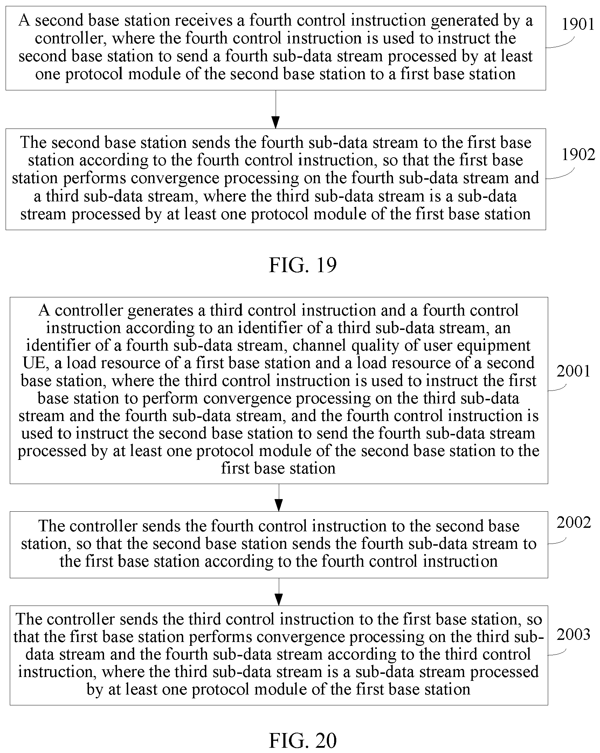

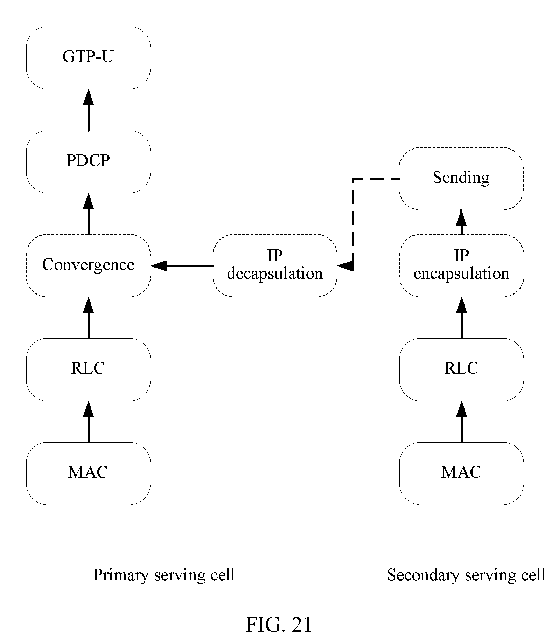

FIG. 19 shows a multiflow transmission method according to another example useful for understanding the present invention. FIG. 21 is a schematic diagram of adaptive processing on a protocol stack of multiple cells according to another example useful for understanding the present invention. With reference to FIG. 19 and FIG. 21, the multiflow transmission method of this example is described as follows:
1901: A second base station receives a fourth control instruction generated by a controller, where the fourth control instruction is used to instruct the second base station to send a fourth sub-data stream processed by at least one protocol module of the second base station to a first base station.
1902: The second base station sends the fourth sub-data stream to the first base station according to the fourth control instruction, so that the first base station performs convergence processing on the fourth sub-data stream and a third sub-data stream, where the third sub-data stream is a sub-data stream processed by at least one protocol module of the first base station.

The third sub-data stream is a sub-data stream processed by the at least one protocol module in the first base station, and the fourth sub-data stream is a sub-data stream processed by the at least one protocol module in the second base station.

For example, the fourth control instruction in the foregoing step 1901 may include: an identifier of the fourth sub-data stream. The identifier of the fourth sub-data stream may include: an IP 5-tuple of the fourth sub-data stream, a VLAN label of the fourth sub-data stream, and/or an MPLS label of the fourth sub-data stream.

Correspondingly, step 1902 may specifically be the following step 1902' not shown in the figure: 1902': The second base station sends the fourth sub-data stream corresponding to the identifier of the fourth sub-data stream to the first base station, so that the first base station converges the third sub-data stream and the fourth sub-data stream and continues to process a converged data stream.

Additionally, the foregoing fourth control instruction may further include: an encapsulation parameter used to encapsulate the fourth sub-data stream.

Step 1902 may specifically be the following step 1902" not shown in the figure:
1902": The second base station encapsulates the fourth sub-data stream according to the encapsulation parameter, and sends the encapsulated fourth sub-data stream to the first base station.

For example, the encapsulation parameter may include: an IP address of the first base station; or includes one or more of the following items: a UDP port of the first base station, an application layer identifier of the first base station, or an application layer protocol indication of the first base station.

In this example, the fourth sub-data stream is a sub-data stream processed by an RLC module in the first base station, and the fourth sub-data stream is a sub-data stream processed by an RLC module in the second base station.

Moreover, a procedure in which the second base station acquires the fourth sub-data stream is not repetitive with a procedure in which the first base station processes the converged data stream. For example, if the second base station obtains the fourth sub-data stream after processing of the RLC module of the second base station, the first base station may continue to perform a process of processing of a PDCP module of the first base station on the converged data stream, but does not perform a process of processing of the RLC module of the second base station.

For example, the third control instruction sent by the controller may include the following information:
Filter append RLC ip_encap (ip, port) push label output
where Filter indicates a characteristic of a data stream on which multiflow transmission needs to be performed, where the characteristic includes information such as an IP 5-tuple, a vlan label or an mpls label.

The fourth control instruction sent by the controller may include the following information:
Filter ip_decap aggregation PDCP
Filter insert rlc aggregation

It can be understood that, for the fourth sub-data stream received from the second base station, the controller delivers an instruction to the first base station, and performs decapsulation processing on data that matches a particular IP 5-tuple or a designated label 1; and performs a standard PDCP processing action by means of a convergence operation after the decapsulation, a sub-data stream received by an air interface of the first base station, and the third sub-data stream received from a designated logical channel identifier (LCID) after processing of the RLC module of the first base station are converged, and then a process of processing of a PDCP module of the first base station that is the same as that described above is performed.

In a specific application, the fourth control instruction includes: the information used to indicate that the sub-data streams processed by the Radio Link Control RLC module are converged, an encapsulation parameter used to encapsulate the fourth sub-data stream, and the identifier of the fourth sub-data stream.

Correspondingly, the foregoing step of sending, by the second base station, the fourth sub-data stream to the first base station according to the fourth control instruction includes:
encapsulating, by the second base station, the fourth sub-data stream by using the encapsulation parameter and according to the information used to indicate that the sub-data streams processed by the RLC module are converged, where the information is in the fourth control instruction, and send the encapsulated fourth sub-data stream to the first base station; and
the foregoing step of sending, by the second base station, the fourth sub-data stream to the first base station according to the fourth control instruction includes:
sending, by first base station, the fourth sub-data stream corresponding to the identifier of the fourth sub-data stream to the first base station according to the third control instruction.

In the multiflow transmission method of this example, a second base station sends a fourth sub-data stream to a first base station according to a fourth control instruction, so that the first base station performs convergence processing on a third sub-data stream of the first base station and the fourth sub-data stream of the second base station, which may effectively improve network resource use efficiency, and also improve network resource processing efficiency.

FIG. 20 shows a multiflow transmission method according to another example useful for understanding the present invention. As shown in FIG. 20, the multiflow transmission method of this example is described as follows:
2001: A controller generates a third control instruction and a fourth control instruction according to an identifier of a third sub-data stream, an identifier of a fourth sub-data stream, channel quality of UE, a load resource of a first base station and a load resource of a second base station, where the third control instruction is used to instruct the first base station to perform convergence processing on the third sub-data stream and the fourth sub-data stream, and the fourth control instruction is used to instruct the second base station to send the fourth sub-data stream processed by at least one protocol module of the second base station to the first base station.
2002: The controller sends the fourth control instruction to the second base station, so that the second base station sends the fourth sub-data stream to the first base station according to the fourth control instruction.
2003: The controller sends the third control instruction to the first base station, so that the first base station performs convergence processing on the third sub-data stream and the fourth sub-data stream according to the third control instruction, where the third sub-data stream is a sub-data stream processed by at least one protocol module of the first base station.

In this example, the third control instruction includes one or more of the following items: information used to indicate that sub-data streams processed by an RLC module are converged, an identifier used to identify the fourth sub-data stream, the identifier of the third sub-data stream, or the identifier of the fourth sub-data stream.

The fourth control instruction includes one or more of the following items: the information used to indicate that the sub-data streams processed by the RLC module are converged, an encapsulation parameter used to encapsulate the fourth sub-data stream, or the identifier of the fourth sub-data stream.

For example, the encapsulation parameter includes: an Internet Protocol IP address of the first base station, and
the encapsulation parameter further includes one or more of the following items: a Multiprotocol Label Switching UDP port of the first base station, an application layer identifier of the first base station, an application layer protocol indication of the first base station, a VLAN label of the third sub-data stream, or an MPLS label of the third sub-data stream; and
the identifier used to identify the fourth sub-data stream includes one or more of the following items: the IP address of the first base station, the UDP port of the first base station, the application layer identifier of the first base station, the application layer protocol indication of the first base station, a VLAN label of the fourth sub-data stream, or an MPLS label of the fourth sub-data stream.

The identifier of the third sub-data stream includes: an IP 5-tuple of the third sub-data stream, a VLAN label of the third sub-data stream, and/or an MPLS label of the third sub-data stream; and
the identifier of the fourth sub-data stream includes: an IP 5-tuple of the fourth sub-data stream, a VLAN label of the fourth sub-data stream, and/or an MPLS label of the fourth sub-data stream.

In the multiflow transmission method of this example, a controller sends a third control instruction to a first base station and sends a fourth control instruction to a second base station, so that the second base station sends a fourth sub-data stream of the second base station to the first base station, and therefore the first base station performs convergence processing on a sub-data stream of the first base station and a sub-data stream of the second base station, which may effectively improve network resource use efficiency, and also improve network resource processing efficiency.

The foregoing controller deploys implementation on flow convergence in a programmable manner, thereby avoiding frequent changes of hardware devices, and reducing deployment costs and standard protocol push costs, which therefore may implement flexible migration of a processing function between different physical entities, and extend to flexible deployment of a protocol stack function.

Persons of ordinary skill in the art may understand that all or some of the steps of the method examples may be implemented by a program instructing relevant hardware. The program may be stored in a computer-readable storage medium. When the program runs, the steps of the method examples are performed. The foregoing storage medium includes: any medium that can store program code, such as a ROM, a RAM, a magnetic disk, or an optical disc.

Finally, it should be noted that the foregoing examples are merely intended for describing the technical solutions of the present invention, but not for limiting the present invention. Although the present invention is described in detail with reference to the foregoing examples, persons of ordinary skill in the art should understand that they may still make modifications to the technical solutions described in the foregoing examples or make equivalent replacements to some or all technical features thereof, without departing from the scope of the technical solutions of the present invention as defined in the attached claims.

## Claims

1. A first base station, comprising:
a memory (21), a transceiver (22) and a processor (23), wherein the memory (21) is configured to store an instruction, and the processor (23) is configured to execute the instruction;
the transceiver (22) is configured to receive a first control instruction generated by a controller, wherein the first control instruction comprises an offloading policy and is used to instruct the first base station to offload a data stream, the offloading policy comprises information used to indicate that the data stream processed by a Packet Data Convergence Protocol, PDCP, module is offloaded and the data stream is processed by at least a PDCP module of the first base station and then is offloaded;
the processor (23) is specifically configured to:
divide the data stream into at least two sub-data streams according to the offloading policy of the first control instruction, and continue to sequentially process communication data of one sub-data stream of the at least two sub-data streams by a Radio Link Control, RLC, module of the first base station according to an ordered set of processing actions of processing the communication data in a protocol stack according to the first control instruction;
the transceiver (22) is configured to separately send another sub-data stream of the at least two sub-data streams obtained by performing division by the processor (23) to a second base station assisting the first base station in processing downlink data, so that a RLC module of the second base station continues to process the another sub-data stream; and
the transceiver (22) is further configured to send the sub-data stream processed by the processor to a user equipment.

2. The first base station according to claim 1, wherein the offloading policy further comprises information used to indicate that the data stream is offloaded according to a proportion and/or an absolute value of traffic or a rate of a sub-data stream carried by the first base station and/or a proportion and/or an absolute value of traffic or a rate of a sub-data stream carried by the second base station; and the processor (23) is specifically configured to:
divide the data stream into the at least two sub-data streams according to the proportion and/or the absolute value of traffic or the rate of a sub-data stream carried by the first base station and/or the proportion and/or the absolute value of traffic or the rate of the sub-data stream carried by the second base station of the offloading policy;
and/or
the first control instruction further comprises: an encapsulation parameter used to encapsulate a second sub-data stream; and
the transceiver (22) is specifically configured to:
encapsulate the second sub-data stream according to the encapsulation parameter, and send the encapsulated second sub-data stream to the second base station;
and/or
the first control instruction further comprises: an identifier of the data stream; and
the processor (23) is specifically configured to:
divide the data stream corresponding to the identifier of the data stream into the at least two sub-data streams according to the first control instruction.

3. The first base station according to claim 1 or 2, wherein the processor (23) is specifically configured to:
divide the data stream into a first sub-data stream and the second sub-data stream according to the first control instruction; and
continue to sequentially process communication data of the first sub-data stream according to the first control instruction, and send the second sub-data stream to the second base station.

4. A second base station assisting a first base station in processing downlink data, comprising:
a memory (31), a transceiver (32) and a processor (33), wherein the memory (31) is configured to store an instruction, and the processor (33) is configured to execute the instruction;
the transceiver (32) is configured to: receive a second control instruction sent by a controller, and receive, according to the second control instruction, a second sub-data stream sent by the first base station and processed by a Packet Data Convergence Protocol, PDCP, module in the first base station, wherein the second control instruction is generated by the controller, and is used to instruct the second base station to continue to process the second sub-data stream;
the processor (33) is configured to continue to sequentially process, by a Radio Link Control, RLC, module of the second base station, communication data of the second sub-data stream according to an ordered set of processing actions of processing the communication data in a protocol stack according to the second control instruction received by the transceiver (32); and
the transceiver (32) is further configured to send the second sub-data stream that the processor continues to process to a user equipment.

5. The second base station according to claim 4, wherein the second control instruction comprises: an identifier used to identify the second sub-data stream; and
the transceiver (32) is specifically configured to:
receive, according to the second control instruction, an encapsulated second sub-data stream sent by the first base station, and decapsulate the encapsulated second sub-data stream by using the identifier used to identify the second sub-data stream, to obtain a decapsulated second sub-data stream.

6. The second base station according to claim 4, wherein the identifier used to identify the second sub-data stream comprises one or more of the following items:
an Internet Protocol, IP, address of the second base station, a User Datagram Protocol, UDP, port of the second base station, an application layer identifier of the second base station, an application layer protocol indication of the second base station, a virtual local area network, VLAN, label of the second sub-data stream, or a Multiprotocol Label Switching, MPLS, label of the second sub-data stream.

7. A control device, comprising:
a memory (41), a transceiver (42) and a processor (43), wherein the memory (41) is configured to store an instruction, and the processor (43) is configured to execute the instruction, which specifically comprises:
generating a first control instruction and a second control instruction according to an identifier of a data stream, channel quality of a user equipment, a load resource of a first base station and a load resource of a second base station assisting the first base station in processing downlink data, wherein the first control instruction comprises an offloading policy and is used to instruct the first base station to offload the data stream, the offloading policy comprises information used to indicate that the data stream processed by a Packet Data Convergence Protocol, PDCP, module is offloaded, and the second control instruction is used to instruct the second base station to continue to process a second sub-data stream processed by a PDCP module in the first base station;;
the transceiver (42) is configured to send the first control instruction generated by the processor (43) to the first base station, so that the first base station offloads the data stream according to the offloading policy of the first control instruction; and
the transceiver (42) is further configured to send the second control instruction generated by the processor (43) to the second base station, so that a Radio Link Control, RLC, module of the second base station continues to process the second sub-data stream of the data stream according to the second control instruction.

8. The control device according to claim 7, wherein the first control instruction further comprises one or more of the following items:
an encapsulation parameter used to encapsulate the second sub-data stream of the data stream, or the identifier of the data stream; and
the second control instruction comprises one or more of the following items:
an identifier used to identify the second sub-data stream of the data stream, a processing rule of the Radio Resource Control Protocol, RLC, module in the second base station, a processing rule of a Media Access Control, MAC, module in the second base station, or quality of service, QOS, information of the data stream.

9. A first base station, comprising:
a memory (51), a transceiver (52) and a processor (53), wherein the memory (51) is configured to store an instruction, and the processor (53) is configured to execute the instruction;
the transceiver (52) is configured to receive a third control instruction generated by a controller, wherein the third control instruction comprises information used to indicate that sub-data streams processed by a Radio Link Control, RLC, module are converged and is used to instruct the first base station to perform convergence processing on a third sub-data stream and a fourth sub-data stream;
the transceiver (52) is further configured to receive, according to the received third control instruction, the fourth sub-data stream sent by a second base station performing assistant processing, so that a user equipment may perform uplink transmission to multiple base stations, wherein the fourth sub-data stream is a sub-data stream processed by at least a RLC module of the second base station; and
the processor (53) is configured to converge, according to the third control instruction received by the transceiver (52), the third sub-data stream and the fourth sub-data stream that is received by the transceiver (52), and continue to sequentially process, by a Packet Data Convergence Protocol, PDCP, module of the first base station, communication data of a converged data stream according to an ordered set of processing actions of processing the communication data in a protocol stack, wherein the third sub-data stream is a sub-data stream processed by at least a RLC module of the first base station.

10. The first base station according to claim 9, wherein the third control instruction comprises: an identifier used to identify the fourth sub-data stream; and
the transceiver (52) is specifically configured to:
receive, according to the received third control instruction, an encapsulated fourth sub-data stream sent by the second base station, and perform decapsulation processing on the encapsulated fourth sub-data stream by using the identifier used to identify the fourth sub-data stream, to obtain a decapsulated fourth sub-data stream;
and/or
the third control instruction further comprises: an identifier of the fourth sub-data stream and an identifier of the third sub-data stream; and
the processor (53) is specifically configured to:
converge the third sub-data stream corresponding to the identifier of the third sub-data stream and the fourth sub-data stream corresponding to the identifier of the fourth sub-data stream according to the information used to indicate that the sub-data streams processed by the RLC module are converged.

11. A second base station assisting a first base station in performing processing, so that a user equipment may perform uplink transmission to multiple base stations, comprising:
a transceiver (61), configured to receive a fourth control instruction generated by a controller, wherein the fourth control instruction comprises information used to indicate that sub-data streams processed by a Radio Link Control, RLC, module are converged and is used to instruct the second base station to send a fourth sub-data stream processed by at least a RLC module of the second base station to the first base station, wherein
the transceiver (61) is further configured to send the fourth sub-data stream to the first base station according to the fourth control instruction, so that the first base station performs convergence processing on the fourth sub-data stream and a third sub-data stream and a Packet Data Convergence Protocol, PDCP, module of the first base station continues to sequentially process communication data of a converged data stream according to an ordered set of processing actions of processing the communication data in a protocol stack, wherein the third sub-data stream is a sub-data stream processed by at least a RLC module of the first base station.

12. The second base station according to claim 11, wherein the fourth control instruction further comprises: an encapsulation parameter used to encapsulate the fourth sub-data stream;
the transceiver (61) is specifically configured to: encapsulate the fourth sub-data stream by using the encapsulation parameter and according to the information used to indicate that the sub-data streams processed by the RLC module are converged, and send the encapsulated fourth sub-data stream to the first base station;
and/or
the fourth control instruction further comprises: an identifier of the fourth sub-data stream; and
the transceiver (61) is specifically configured to:
send the fourth sub-data stream corresponding to the identifier of the fourth sub-data stream to the first base station according to the received fourth control instruction.

13. A control device, comprising:
a memory (71), a transceiver (72) and a processor (73), wherein the memory (71) is configured to store an instruction, and the processor (73) is configured to execute the instruction, which specifically comprises:
generating a third control instruction and a fourth control instruction according to an identifier of a third sub-data stream, an identifier of a fourth sub-data stream, channel quality of a user equipment, a load resource of a first base station and a load resource of a second base station performing assistant processing, so that the user equipment may perform uplink transmission to multiple base stations, wherein the third control instruction comprises information used to indicate that sub-data streams processed by a Radio Link Control, RLC, module is converged and is used to instruct the first base station to perform convergence processing on the third sub-data stream and the fourth sub-data stream, and the fourth control instruction comprises information used to indicate that the sub-data streams processed by a RLC module are converged and is used to instruct the second base station to send the fourth sub-data stream processed by at least a RLC module of the second base station to the first base station;
the transceiver (72) is configured to send the fourth control instruction generated by the processor to the second base station, so that the second base station sends the fourth sub-data stream to the first base station according to the fourth control instruction; and
the transceiver (72) is further configured to send the third control instruction generated by the processor to the first base station, so that the first base station performs convergence processing on the third sub-data stream and the fourth sub-data stream according to the third control instruction and continues to sequentially process, by a Packet Data Convergence Protocol, PDCP, module of the first base station, communication data of a converged data stream according to an ordered set of processing actions of processing the communication data in a protocol stack, wherein the third sub-data stream is a sub-data stream processed by at least a RLC module of the first base station.

14. The control device according to claim 13, wherein the third control instruction further comprises one or more of the following items:
an identifier used to identify the fourth sub-data stream, the identifier of the third sub-data stream, or the identifier of the fourth sub-data stream; and
the fourth control instruction comprises one or more of the following items:
an encapsulation parameter used to encapsulate the fourth sub-data stream, or the identifier of the fourth sub-data stream.

15. A multiflow transmission method, comprising:
receiving, by a first base station, a first control instruction generated by a controller, wherein the first control instruction comprises an offloading policy and is used to instruct the first base station to offload a data stream, the offloading policy comprises information used to indicate that the data stream processed by a Packet Data Convergence Protocol, PDCP, module is offloaded and the data stream is processed by at least a PDCP module of the first base station and then is offloaded;
dividing, by the first base station, the data stream into at least two sub-data streams according to the offloading policy of the first control instruction, continuing to sequentially process, by at least a Radio Link Control, RLC, module of the first base station, communication data of one sub-data stream of the at least two sub-data streams according to an ordered set of processing actions of processing the communication data in a protocol stack according to the first control instruction, and separately sending another sub-data stream of the at least two sub-data streams to a second base station assisting the first base station in processing downlink data, so that a RLC module of the second base station continues to process the another sub-data stream; and
sending, by the first base station, the sub-data stream that the first base station continues to process to a user equipment.

16. The method according to claim 15, wherein the offloading policy further comprises information used to indicate that the data stream is offloaded according to a proportion and/or an absolute value of traffic or a rate of a sub-data stream carried by the first base station and/or a proportion and/or an absolute value of traffic or a rate of a sub-data stream carried by the second base station; and
the dividing, by the first base station, the data stream into the at least two sub-data streams according to the first control instruction comprises:
dividing, by the first base station, the data stream into the at least two sub-data streams according to the proportion and/or the absolute value of traffic or the rate of a sub-data stream carried by the first base station and/or the proportion and/or the absolute value of traffic or the rate of the sub-data stream carried by the second base station of the offloading policy;
and/or
the first control instruction comprises: an encapsulation parameter used to encapsulate a second sub-data stream; and
the sending the second sub-data stream to the second base station comprises:
encapsulating, by the first base station, the second sub-data stream according to the encapsulation parameter, and sending the encapsulated second sub-data stream to the second base station;
and/or
the first control instruction further comprises:
an identifier of the data stream; and
the dividing, by the first base station, the data stream into the at least two sub-data streams according to the first control instruction comprises:
dividing, by the first base station, the data stream corresponding to the identifier of the data stream into the at least two sub-data streams according to the first control instruction.

17. A multiflow transmission method, comprising:
receiving, by a first base station, a third control instruction generated by a controller, wherein the third control instruction comprises information used to indicate that sub-data streams processed by a Radio Link Control, RLC, module are converged and is used to instruct the first base station to perform convergence processing on a third sub-data stream and a fourth sub-data stream;
receiving, by the first base station according to the third control instruction, the fourth sub-data stream sent by a second base station performing assistant processing, so that a user equipment may perform uplink transmission to multiple base stations, wherein the fourth sub-data stream is a sub-data stream processed by at least a RLC module of the second base station; and
converging, by the first base station, the third sub-data stream and the fourth sub-data stream according to the third control instruction, and continuing to sequentially process, by a Packet Data Convergence Protocol, PDCP, module of the first base station, communication data of a converged data stream according to an ordered set of processing actions of processing the communication data in a protocol stack, wherein the third sub-data stream is a sub-data stream processed by at least a RLC module of the first base station.

18. The method according to claim 17, wherein the third control instruction comprises: an identifier used to identify the fourth sub-data stream; and
the receiving, by the first base station according to the third control instruction, the fourth sub-data stream sent by the second base station comprises:
receiving, by the first base station according to the third control instruction, an encapsulated fourth sub-data stream sent by the second base station, and performing decapsulation processing on the encapsulated fourth sub-data stream by using the identifier used to identify the fourth sub-data stream, to obtain a decapsulated fourth sub-data stream;
and/or
the third control instruction further comprises: an identifier of the fourth sub-data stream and an identifier of the third sub-data stream; and
the converging, by the first base station, the third sub-data stream and the fourth sub-data stream according to the third control instruction comprises:
converging, by the first base station, the third sub-data stream corresponding to the identifier of the third sub-data stream and the fourth sub-data stream corresponding to the identifier of the fourth sub-data stream according to the information used to indicate that the sub-data streams processed by the RLC module are converged.

## Patentansprüche

1. Erste Basisstation, umfassend:
einen Speicher (21), einen Sendeempfänger (22) und einen Prozessor (23), wobei der Speicher (21) dafür konfiguriert ist, eine Anweisung zu speichern, und der Prozessor (23) dafür konfiguriert ist, die Anweisung auszuführen,
der Sendeempfänger (22) dafür konfiguriert ist, eine durch eine Steuerung erzeugte erste Steueranweisung zu empfangen, wobei die erste Steueranweisung eine Auslagerungsrichtlinie umfasst und verwendet wird, um die erste Basisstation anzuweisen, einen Datenstrom auszulagern, die Auslagerungsrichtlinie Informationen umfasst, die verwendet werden, um anzuzeigen, dass der durch ein Paketdatenkonvergenzprotokoll, PDCP, verarbeitete Datenstrom ausgelagert wird, und der Datenstrom durch zumindest ein PDCP-Modul der ersten Basisstation verarbeitet wird und dann ausgelagert wird,
der Prozessor (23) insbesondere konfiguriert ist, um:
den Datenstrom gemäß der Auslagerungsrichtlinie der ersten Steueranweisung in mindestens zwei Teildatenströme zu teilen und gemäß der ersten Steueranweisung Kommunikationsdaten eines Teildatenstroms der mindestens zwei Teildatenströme durch ein Funkverbindungssteuerungs-, RLC-, Modul der ersten Basisstation gemäß einer geordneten Menge von Verarbeitungsmaßnahmen einer Verarbeitung der Kommunikationsdaten in einem Protokollstapel sequenziell weiterzuverarbeiten,
der Sendeempfänger (22) dafür konfiguriert ist, einen weiteren Teildatenstrom der mindestens zwei durch Vornehmen der Teilung durch den Prozessor (23) erhaltenen Teildatenströme separat an eine zweite Basisstation zu senden, welche die erste Basisstation beim Verarbeiten von Downlink-Daten unterstützt, so dass ein RLC-Modul der zweiten Basisstation den weiteren Teildatenstrom weiterverarbeitet, und
der Sendeempfänger (22) ferner dafür konfiguriert ist, den durch den Prozessor verarbeiteten Teildatenstrom an ein Nutzergerät zu senden.

2. Erste Basisstation nach Anspruch 1, wobei die Auslagerungsrichtlinie ferner Informationen umfasst, die verwendet werden, um anzuzeigen, dass der Datenstrom gemäß einem Anteil und/oder einem Absolutwert eines Datenverkehrs oder einer Rate eines durch die erste Basisstation abgewickelten Teildatenstroms und/oder einem Anteil und/oder einem Absolutwert eines Datenverkehrs oder einer Rate eines durch die zweite Basisstation abgewickelten Teildatenstroms ausgelagert wird,
und der Prozessor (23) insbesondere konfiguriert ist, um:
den Datenstrom gemäß dem Anteil und/oder dem Absolutwert des Datenverkehrs oder der Rate eines durch die erste Basisstation abgewickelten Teildatenstroms und/oder dem Anteil und/oder dem Absolutwert des Datenverkehrs oder der Rate des durch die zweite Basisstation abgewickelten Teildatenstroms der Auslagerungsrichtlinie in die mindestens zwei Teildatenströme zu teilen,
und/oder
die erste Steueranweisung ferner Folgendes umfasst: einen zum Kapseln eines zweiten Teildatenstroms verwendeten Kapselungsparameter, und
der Sendeempfänger (22) insbesondere konfiguriert ist, um
den zweiten Teildatenstrom gemäß dem Kapselungsparameter zu kapseln und den gekapselten zweiten Teildatenstrom an die zweite Basisstation zu senden,
und/oder
die erste Steueranweisung ferner Folgendes umfasst: eine Kennung des Datenstroms, und der Prozessor (23) insbesondere konfiguriert ist, um:
gemäß der ersten Steueranweisung den Datenstrom entsprechend der Kennung des Datenstroms in die mindestens zwei Teildatenströme zu teilen.

3. Erste Basisstation nach Anspruch 1 oder 2, wobei der Prozessor (23) insbesondere konfiguriert ist, um:
gemäß der ersten Steueranweisung den Datenstrom in einen ersten Teildatenstrom und den zweiten Teildatenstrom zu teilen und
gemäß der ersten Steueranweisung Kommunikationsdaten des ersten Teildatenstroms sequenziell weiterzuverarbeiten und den zweiten Teildatenstrom an die zweite Basisstation zu senden.

4. Zweite Basisstation, die eine erste Basisstation beim Verarbeiten von Downlink-Daten unterstützt, umfassend:
einen Speicher (31), einen Sendeempfänger (32) und einen Prozessor (33), wobei der Speicher (31) dafür konfiguriert ist, eine Anweisung zu speichern, und der Prozessor (33) dafür konfiguriert ist, die Anweisung auszuführen,
der Sendeempfänger (32) konfiguriert ist, um: eine durch eine Steuerung gesendete zweite Steueranweisung zu empfangen und gemäß der zweiten Steueranweisung einen durch die erste Basisstation gesendeten und durch ein Paketdatenkonvergenzprotokoll-, PDCP-, Modul in der ersten Basisstation verarbeiteten zweiten Teildatenstrom zu empfangen, wobei die zweite Steueranweisung durch die Steuerung erzeugt ist und verwendet wird, um die zweite Basisstation anzuweisen, den zweiten Teildatenstrom weiterzuverarbeiten,
der Prozessor (33) dafür konfiguriert ist, gemäß der durch den Sendeempfänger (32) empfangenen zweiten Steueranweisung Kommunikationsdaten des zweiten Teildatenstroms durch ein Funkverbindungssteuerungs-, RLC-, Modul der zweiten Basisstation gemäß einer geordneten Menge von Verarbeitungsmaßnahmen einer Verarbeitung der Kommunikationsdaten in einem Protokollstapel sequenziell weiterzuverarbeiten, und
der Sendeempfänger (32) ferner dafür konfiguriert ist, den zweiten Teildatenstrom, den der Prozessor weiterverarbeitet, an ein Nutzergerät zu senden.

5. Zweite Basisstation nach Anspruch 4, wobei die zweite Steueranweisung Folgendes umfasst: eine zum Identifizieren des zweiten Teildatenstroms verwendete Kennung, und der Sendeempfänger (32) insbesondere konfiguriert ist, um:
gemäß der zweiten Steueranweisung einen durch die erste Basisstation gesendeten gekapselten zweiten Teildatenstrom zu empfangen und den gekapselten zweiten Teildatenstrom durch Verwendung der zum Identifizieren des zweiten Teildatenstroms verwendeten Kennung zu entkapseln, um einen entkapselten zweiten Teildatenstrom zu erhalten.

6. Zweite Basisstation nach Anspruch 4, wobei die zum Identifizieren des zweiten Teildatenstroms verwendete Kennung eines oder mehrere der folgenden Elemente umfasst:
eine Internetprotokoll-, IP-, Adresse der zweiten Basisstation, einen Nutzerdatengrammprotokoll-, UDP-, Anschluss der zweiten Basisstation, eine Anwendungsschichtkennung der zweiten Basisstation, eine Anwendungsschichtprotokollanzeige der zweiten Basisstation, eine Virtual-Local-Area-Network-, VLAN-, Markierung des zweiten Teildatenstroms oder eine Multiprotokoll-Label-Switching-, MPLS-, Markierung des zweiten Teildatenstroms.

7. Steuereinrichtung, umfassend:
einen Speicher (41), einen Sendeempfänger (42) und einen Prozessor (43), wobei der Speicher (41) dafür konfiguriert ist, eine Anweisung zu speichern, und der Prozessor (43) dafür konfiguriert ist, die Anweisung auszuführen, was insbesondere Folgendes umfasst:
Erzeugen einer ersten Steueranweisung und einer zweiten Steueranweisung gemäß einer Kennung eines Datenstroms, einer Kanalqualität eines Nutzergeräts, einer Auslastungsressource einer ersten Basisstation und einer Auslastungsressource einer zweiten Basisstation, welche die erste Basisstation beim Verarbeiten von Downlink-Daten unterstützt, wobei die erste Steueranweisung eine Auslagerungsrichtlinie umfasst und verwendet wird, um die erste Basisstation anzuweisen, den Datenstrom auszulagern, die Auslagerungsrichtlinie Informationen umfasst, die verwendet werden, um anzuzeigen, dass der durch ein Paketdatenkonvergenzprotokoll-, PDCP-, Modul verarbeitete Datenstrom ausgelagert wird, und die zweite Steueranweisung verwendet wird, um die zweite Basisstation anzuweisen, einen durch ein PDCP-Modul in der ersten Basisstation verarbeiteten zweiten Teildatenstrom weiterzuverarbeiten,
der Sendeempfänger (42) dafür konfiguriert ist, die durch den Prozessor (43) erzeugte erste Steueranweisung an die erste Basisstation zu senden, so dass die erste Basisstation den Datenstrom gemäß der Auslagerungsrichtlinie der ersten Steueranweisung auslagert, und
der Sendeempfänger (42) ferner dafür konfiguriert ist, die durch den Prozessor (43) erzeugte zweite Steueranweisung an die zweite Basisstation zu senden, so dass ein Funkverbindungssteuerungs-, RLC-, Modul der zweiten Basisstation den zweiten Teildatenstrom des Datenstroms gemäß der zweiten Steueranweisung weiterverarbeitet.

8. Steuereinrichtung nach Anspruch 7, wobei die erste Steueranweisung ferner eines oder mehrere der folgenden Elemente umfasst:
einen zum Kapseln des zweiten Teildatenstroms des Datenstroms verwendeten Kapselungsparameter oder die Kennung des Datenstroms, und
die zweite Steueranweisung eines oder mehrere der folgenden Elemente umfasst:
eine zum Identifizieren des zweiten Teildatenstroms des Datenstroms verwendete Kennung, eine Verarbeitungsregel des Funkressourcensteuerungsprotokoll-, RLC-, Moduls in der zweiten Basisstation, eine Verarbeitungsregel eines Media-Access-Control-, MAC-, Moduls in der zweiten Basisstation, oder Dienstgüte-, QoS-, Informationen des Datenstroms.

9. Erste Basisstation, umfassend:
einen Speicher (51), einen Sendeempfänger (52) und einen Prozessor (53), wobei der Speicher (51) dafür konfiguriert ist, eine Anweisung zu speichern, und der Prozessor (53) dafür konfiguriert ist, die Anweisung auszuführen,
der Sendeempfänger (52) dafür konfiguriert ist, eine durch eine Steuerung erzeugte dritte Steueranweisung zu empfangen, wobei die dritte Steueranweisung Informationen umfasst, die verwendet werden, um anzuzeigen, dass von einem Funkverbindungssteuerungs-, RLC-, Modul verarbeitete Teildatenströme zusammengeführt werden, und verwendet wird, um die erste Basisstation anzuweisen, an einem dritten Teildatenstrom und einem vierten Teildatenstrom eine Zusammenführungsverarbeitung vorzunehmen,
der Sendeempfänger (52) ferner dafür konfiguriert ist, gemäß der empfangenen dritten Steueranweisung den durch eine eine unterstützende Verarbeitung vornehmende zweite Basisstation gesendeten vierten Teildatenstrom zu empfangen, so dass ein Nutzergerät eine Uplink-Übertragung an mehrere Basisstationen vornehmen kann, wobei es sich beim vierten Teildatenstrom um einen durch zumindest ein RLC-Modul der zweiten Basisstation verarbeiteten Teildatenstrom handelt, und
der Prozessor (53) dafür konfiguriert ist, gemäß der durch den Sendeempfänger (52) empfangenen dritten Steueranweisung den dritten Teildatenstrom und den vierten Teildatenstrom, der durch den Sendeempfänger (52) empfangen wird, zusammenzuführen, und durch ein Paketdatenkonvergenzprotokoll-, PDCP-, Modul der ersten Basisstation Kommunikationsdaten eines zusammengeführten Datenstroms gemäß einer geordneten Menge von Verarbeitungsmaßnahmen einer Verarbeitung der Kommunikationsdaten in einem Protokollstapel sequenziell weiterzuverarbeiten, wobei es sich beim dritten Teildatenstrom um einen durch zumindest ein RLC-Modul der ersten Basisstation verarbeiteten Teildatenstrom handelt.

10. Erste Basisstation nach Anspruch 9, wobei die dritte Steueranweisung Folgendes umfasst: eine zum Identifizieren des vierten Teildatenstroms verwendete Kennung, und der Sendeempfänger (52) insbesondere konfiguriert ist, um:
gemäß der empfangenen dritten Steueranweisung einen durch die zweite Basisstation gesendeten gekapselten vierten Teildatenstrom zu empfangen und durch Verwendung der zum Identifizieren des vierten Teildatenstroms verwendeten Kennung an dem gekapselten vierten Teildatenstrom eine Entkapselungsverarbeitung vorzunehmen, um einen entkapselten vierten Teildatenstrom zu erhalten,
und/oder
die dritte Steueranweisung ferner Folgendes umfasst: eine Kennung des vierten Teildatenstroms und eine Kennung des dritten Teildatenstroms, und
der Prozessor (53) insbesondere konfiguriert ist, um:
gemäß den Informationen, die verwendet werden, um anzuzeigen, dass die durch das RLC-Modul verarbeiteten Teildatenströme zusammengeführt werden, den dritten Teildatenstrom entsprechend der Kennung des dritten Teildatenstroms und den vierten Teildatenstrom entsprechend der Kennung des vierten Teildatenstroms zusammenzuführen.

11. Zweite Basisstation, die eine erste Basisstation beim Vornehmen einer Verarbeitung unterstützt, so dass ein Nutzergerät eine Uplink-Übertragung an mehrere Basisstationen vornehmen kann, umfassend:
einen Sendeempfänger (61), der dafür konfiguriert ist, eine durch eine Steuerung erzeugte vierte Steueranweisung zu empfangen, wobei die vierte Steueranweisung Informationen umfasst, die verwendet werden, um anzuzeigen, dass durch ein Funkverbindungssteuerungs-, RLC-, Modul verarbeitete Teildatenströme zusammengeführt werden, und verwendet wird, um die zweite Basisstation anzuweisen, einen durch zumindest ein RLC-Modul der zweiten Basisstation verarbeiteten vierten Teildatenstrom an die erste Basisstation zu senden, wobei
der Sendeempfänger (61) ferner dafür konfiguriert ist, gemäß der vierten Steueranweisung den vierten Teildatenstrom an die erste Basisstation zu senden, so dass die erste Basisstation am vierten Teildatenstrom und einem dritten Teildatenstrom eine Zusammenführungsverarbeitung vornimmt und ein Paketdatenkonvergenzprotokoll-, PDCP-, Modul der ersten Basisstation Kommunikationsdaten eines zusammengeführten Datenstroms gemäß einer geordneten Menge von Verarbeitungsmaßnahmen einer Verarbeitung der Kommunikationsdaten in einem Protokollstapel sequenziell weiterverarbeitet, wobei es sich bei dem dritten Teildatenstrom um einen durch zumindest ein RLC-Modul der ersten Basisstation verarbeiteten Teildatenstrom handelt.

12. Zweite Basisstation nach Anspruch 11, wobei die vierte Steueranweisung ferner Folgendes umfasst: einen zum Kapseln des vierten Teildatenstroms verwendeten Kapselungsparameter,
der Sendeempfänger (61) insbesondere konfiguriert ist, um: durch Verwendung des Kapselungsparameters und gemäß den Informationen, die verwendet werden, um anzuzeigen, dass die durch das RLC-Modul verarbeiteten Teildatenströme zusammengeführt werden, den vierten Teildatenstrom zu kapseln und den gekapselten vierten Teildatenstrom an die erste Basisstation zu senden,
und/oder
die vierte Steueranweisung ferner Folgendes umfasst: eine Kennung des vierten Teildatenstroms,
und
der Sendeempfänger (61) insbesondere konfiguriert ist, um:
gemäß der empfangenen vierten Steueranweisung den vierten Teildatenstrom entsprechend der Kennung des vierten Teildatenstroms an die erste Basisstation zu senden.

13. Steuereinrichtung, umfassend:
einen Speicher (71), einen Sendeempfänger (72) und einen Prozessor (73), wobei der Speicher (71) dafür konfiguriert ist, eine Anweisung zu speichern, und der Prozessor (73) dafür konfiguriert ist, die Anweisung auszuführen, was insbesondere Folgendes umfasst:
Erzeugen einer dritten Steueranweisung und einer vierten Steueranweisung gemäß einer Kennung eines dritten Teildatenstroms, einer Kennung eines vierten Teildatenstroms, einer Kanalqualität eines Nutzergeräts, einer Auslastungsressource einer ersten Basisstation und einer Auslastungsressource einer eine unterstützende Verarbeitung vornehmenden zweiten Basisstation, so dass das Nutzergerät eine Uplink-Übertragung an mehrere Basisstationen vornehmen kann, wobei die dritte Steueranweisung Informationen umfasst, die verwendet werden, um anzuzeigen, dass durch ein Funkverbindungssteuerungs-, RLC-, Modul verarbeitete Teildatenströme zusammengeführt werden, und verwendet wird, um die erste Basisstation anzuweisen, am dritten Teildatenstrom und vierten Teildatenstrom eine Zusammenführungsverarbeitung vorzunehmen, und die vierte Steueranweisung Informationen umfasst, die verwendet werden, um anzuzeigen, dass die durch ein RLC-Modul verarbeiteten Teildatenströme zusammengeführt werden, und verwendet wird, um die zweite Basisstation anzuweisen, den durch zumindest ein RLC-Modul der zweiten Basisstation verarbeiteten vierten Teildatenstrom an die erste Basisstation zu senden,
der Sendeempfänger (72) dafür konfiguriert ist, die durch den Prozessor erzeugte vierte Steueranweisung an die zweite Basisstation zu senden, so dass die zweite Basisstation gemäß der vierten Steueranweisung den vierten Teildatenstrom an die erste Basisstation sendet, und
der Sendeempfänger (72) ferner dafür konfiguriert ist, die durch den Prozessor erzeugte dritte Steueranweisung an die erste Basisstation zu senden, so dass die erste Basisstation gemäß der dritten Steueranweisung am dritten Teildatenstrom und vierten Teildatenstrom eine Zusammenführungsverarbeitung vornimmt und durch ein Paketdatenkonvergenzprotokoll-, PDCP-, Modul der ersten Basisstation Kommunikationsdaten eines zusammengeführten Datenstroms gemäß einer geordneten Menge von Verarbeitungsmaßnahmen einer Verarbeitung der Kommunikationsdaten in einem Protokollstapel sequenziell weiterverarbeitet, wobei es sich beim dritten Teildatenstrom um einen durch zumindest ein RLC-Modul der ersten Basisstation verarbeiteten Teildatenstrom handelt.

14. Steuereinrichtung nach Anspruch 13, wobei die dritte Steueranweisung ferner eines oder mehrere der folgenden Elemente umfasst:
eine zum Identifizieren des vierten Teildatenstroms verwendete Kennung, die Kennung des dritten Teildatenstroms oder die Kennung des vierten Teildatenstroms, und
die vierte Steueranweisung eines oder mehrere der folgenden Elemente umfasst:
einen zum Kapseln des vierten Teildatenstroms verwendeten Kapselungsparameter oder die Kennung des vierten Teildatenstroms.

15. Verfahren für Mehrstromübertragung, umfassend:
durch eine erste Basisstation erfolgendes Empfangen einer durch eine Steuerung erzeugten ersten Steueranweisung,
wobei die erste Steueranweisung eine Auslagerungsrichtlinie umfasst und verwendet wird, um die erste Basisstation anzuweisen, einen Datenstrom auszulagern, die Auslagerungsrichtlinie Informationen umfasst, die verwendet werden, um anzuzeigen, dass der durch ein Paketdatenkonvergenzprotokoll-, PDCP-, Modul verarbeitete Datenstrom ausgelagert wird, und der Datenstrom durch zumindest ein PDCP-Modul der ersten Basisstation verarbeitet wird und dann ausgelagert wird,
durch die erste Basisstation erfolgendes Teilen des Datenstroms in mindestens zwei Teildatenströme gemäß der Auslagerungsrichtlinie der ersten Steueranweisung, durch zumindest ein Funkverbindungssteuerungs-, RLC-, Modul der ersten Basisstation gemäß der ersten Steueranweisung erfolgendes sequenzielles Weiterverarbeiten von Kommunikationsdaten eines Teildatenstroms der mindestens zwei Teildatenströme gemäß einer geordneten Menge von Verarbeitungsmaßnahmen einer Verarbeitung der Kommunikationsdaten in einem Protokollstapel und separates Senden eines weiteren Teildatenstroms der mindestens zwei Teildatenströme an eine zweite Basisstation, welche die erste Basisstation beim Verarbeiten von Downlink-Daten unterstützt, so dass ein RLC-Modul der zweiten Basisstation den weiteren Teildatenstrom weiterverarbeitet, und
durch die erste Basisstation erfolgendes Senden des Teildatenstroms, den die erste Basisstation weiterverarbeitet, an ein Nutzergerät.

16. Verfahren nach Anspruch 15, wobei die Auslagerungsrichtlinie ferner Informationen umfasst, die verwendet werden, um anzuzeigen, dass der Datenstrom gemäß einem Anteil und/oder einem Absolutwert eines Datenverkehrs oder einer Rate eines durch die erste Basisstation abgewickelten Teildatenstroms und/oder einem Anteil und/oder einem Absolutwert eines Datenverkehrs oder einer Rate eines durch die zweite Basisstation abgewickelten Teildatenstroms ausgelagert wird, und
das gemäß der ersten Steueranweisung durch die erste Basisstation erfolgende Teilen des Datenstroms in die mindestens zwei Teildatenströme Folgendes umfasst:
durch die erste Basisstation erfolgendes Teilen des Datenstroms in die mindestens zwei Teildatenströme gemäß dem Anteil und/oder dem Absolutwert des Datenverkehrs oder der Rate eines durch die erste Basisstation abgewickelten Teildatenstroms und/oder dem Anteil und/oder dem Absolutwert des Datenverkehrs oder der Rate des durch die zweite Basisstation abgewickelten Teildatenstroms der Auslagerungsrichtlinie,
und/oder
die erste Steueranweisung Folgendes umfasst: einen zum Kapseln eines zweiten Teildatenstroms verwendeten Kapselungsparameter, und
das Senden des zweiten Teildatenstroms an die zweite Basisstation Folgendes umfasst: durch die erste Basisstation erfolgendes Kapseln des zweiten Teildatenstroms gemäß dem Kapselungsparameter und Senden des gekapselten zweiten Teildatenstroms an die zweite Basisstation,
und/oder die erste Steueranweisung ferner Folgendes umfasst:
eine Kennung des Datenstroms, und
das gemäß der ersten Steueranweisung durch die erste Basisstation erfolgende Teilen des Datenstroms in die mindestens zwei Teildatenströme Folgendes umfasst:
gemäß der ersten Steueranweisung durch die erste Basisstation erfolgendes Teilen des Datenstroms entsprechend der Kennung des Datenstroms in die mindestens zwei Teildatenströme.

17. Verfahren zur Mehrstromübertragung, umfassend:
durch eine erste Basisstation erfolgendes Empfangen einer durch eine Steuerung erzeugten dritten Steueranweisung, wobei die dritte Steueranweisung Informationen umfasst, die verwendet werden, um anzuzeigen, dass durch ein Funkverbindungssteuerungs-, RLC-, Modul verarbeitete Teildatenströme zusammengeführt werden, und verwendet wird, um die erste Basisstation anzuweisen, an einem dritten Teildatenstrom und einem vierten Teildatenstrom eine Zusammenführungsverarbeitung vorzunehmen,
durch die erste Basisstation gemäß der dritten Steueranweisung erfolgendes Empfangen des durch eine eine unterstützende Verarbeitung vornehmende zweite Basisstation gesendeten vierten Teildatenstroms, so dass ein Nutzergerät eine Uplink-Übertragung an mehrere Basisstationen vornehmen kann, wobei es sich beim vierten Teildatenstrom um einen durch zumindest ein RLC-Modul der zweiten Basisstation verarbeiteten Teildatenstrom handelt, und
gemäß der dritten Steueranweisung durch die erste Basisstation erfolgendes Zusammenführen des dritten Teildatenstroms und des vierten Teildatenstroms und durch ein Paketdatenkonvergenzprotokoll-, PDCP-, Modul der ersten Basisstation erfolgendes sequenzielles Weiterverarbeiten von Kommunikationsdaten eines zusammengeführten Datenstroms gemäß einer geordneten Menge von Verarbeitungsmaßnahmen einer Verarbeitung der Kommunikationsdaten in einem Protokollstapel, wobei es sich beim dritten Teildatenstrom um einen durch zumindest ein RLC-Modul der ersten Basisstation verarbeiteten Teildatenstrom handelt.

18. Verfahren nach Anspruch 17, wobei die dritte Steueranweisung Folgendes umfasst:
eine zum Identifizieren des vierten Teildatenstroms verwendete Kennung, und
das gemäß der dritten Steueranweisung durch die erste Basisstation erfolgende Empfangen des durch die zweite Basisstation gesendeten vierten Teildatenstroms Folgendes umfasst:
gemäß der dritten Steueranweisung durch die erste Basisstation erfolgendes Empfangen eines durch die zweite Basisstation gesendeten gekapselten vierten Teildatenstroms und Vornehmen einer Entkapselungsverarbeitung am gekapselten vierten Teildatenstrom durch Verwenden der zum Identifizieren des vierten Teildatenstroms verwendeten Kennung, um einen entkapselten vierten Teildatenstrom zu erhalten,
und/oder
die dritte Steueranweisung ferner Folgendes umfasst: eine Kennung des vierten Teildatenstroms und eine Kennung des dritten Teildatenstroms, und
das gemäß der dritten Steueranweisung durch die erste Basisstation erfolgende Zusammenführen des dritten Teildatenstroms und des vierten Teildatenstroms Folgendes umfasst:
durch die erste Basisstation erfolgendes Zusammenführen des dritten Teildatenstroms entsprechend der Kennung des dritten Teildatenstroms und des vierten Teildatenstroms entsprechend der Kennung des vierten Teildatenstroms gemäß den Informationen, die verwendet werden, um anzuzeigen, dass die durch das RLC-Modul verarbeiteten Teildatenströme zusammengeführt werden.

## Revendications

1. Première station de base, comprenant :
une mémoire (21), un émetteur-récepteur (22) et un processeur (23), dans laquelle la mémoire (21) est configurée pour stocker une instruction, et le processeur (23) est configuré pour exécuter l'instruction ;
l'émetteur-récepteur (22) est configuré pour recevoir une première instruction de commande générée par un contrôleur, dans laquelle la première instruction de commande comprend une politique de déchargement et est utilisée pour ordonner à la première station de base de décharger un flux de données, la politique de déchargement comprend des informations utilisées pour indiquer que le flux de données traité par un module de protocole de convergence de données par paquets, PDCP, est déchargé et le flux de données est traité par au moins un module PDCP de la première station de base, puis déchargé ;
le processeur (23) est spécifiquement configuré pour :
diviser le flux de données en au moins deux sous-flux de données conformément à la politique de déchargement de la première instruction de commande, et continuer à traiter de manière séquentielle des données de communication d'un sous-flux de données des au moins deux sous-flux de données par un module de commande de liaison radio, RLC, de la première station de base selon un ensemble ordonné d'actions de traitement pour traiter les données de communication dans une pile de protocoles conformément à la première instruction de commande ;
l'émetteur-récepteur (22) est configuré pour envoyer séparément un autre sous-flux de données des au moins deux sous-flux de données obtenus en effectuant une division par le processeur (23) vers une seconde station de base assistant la première station de base dans le traitement de données de liaison descendante, de sorte qu'un module RLC de la seconde station de base continue à traiter l'autre sous-flux de données ; et
l'émetteur-récepteur (22) est en outre configuré pour envoyer le sous-flux de données traité par le processeur à un équipement utilisateur.

2. Première station de base selon la revendication 1, dans laquelle la politique de déchargement comprend en outre des informations utilisées pour indiquer que le flux de données est déchargé selon une proportion et/ou une valeur absolue de trafic ou un débit d'un sous-flux de données acheminé par la première station de base et/ou une proportion et/ou une valeur absolue de trafic ou un débit d'un sous-flux de données acheminé par la seconde station de base ; et le processeur (23) est spécifiquement configuré pour :
diviser le flux de données en les au moins deux sous-flux de données en fonction de la proportion et/ou de la valeur absolue de trafic ou du débit d'un sous-flux de données acheminé par la première station de base et/ou de la proportion et/ou de la valeur absolue de trafic ou du débit du sous-flux de données acheminé par la seconde station de base de la politique de déchargement ; et/ou
la première instruction de commande comprend en outre : un paramètre d'encapsulation utilisé pour encapsuler un second sous-flux de données ; et
l'émetteur-récepteur (22) est spécifiquement configuré pour :
encapsuler le second sous-flux de données conformément au paramètre d'encapsulation, et envoyer le second sous-flux de données encapsulé à la seconde station de base ; et/ou la première instruction de commande comprend en outre : un identificateur du flux de données ; et
le processeur (23) est spécifiquement configuré pour :
diviser le flux de données correspondant à l'identificateur du flux de données en au moins deux sous-flux de données conformément à la première instruction de commande.

3. Première station de base selon la revendication 1 ou 2, dans laquelle le processeur (23) est spécifiquement configuré pour :
diviser le flux de données en un premier sous-flux de données et le second sous-flux de données conformément à la première instruction de commande ; et
continuer à traiter séquentiellement des données de communication du premier sous-flux de données conformément à la première instruction de commande, et envoyer le second sous-flux de données à la seconde station de base.

4. Seconde station de base assistant une première station de base dans le traitement de données de liaison descendante, comprenant :
une mémoire (31), un émetteur-récepteur (32) et un processeur (33), dans laquelle la mémoire (31) est configurée pour stocker une instruction, et le processeur (33) est configuré pour exécuter l'instruction ;
l'émetteur-récepteur (32) est configuré pour : recevoir une seconde instruction de commande envoyée par un contrôleur, et recevoir, conformément à la seconde instruction de commande, un second sous-flux de données envoyé par la première station de base et traité par un module de protocole de convergence de données par paquets, PDCP, dans la première station de base, dans laquelle la seconde instruction de commande est générée par le contrôleur et est utilisée pour ordonner à la seconde station de base de continuer à traiter le second sous-flux de données ;
le processeur (33) est configuré pour continuer à traiter séquentiellement, par un module de commande de liaison radio, RLC, de la seconde station de base, des données de communication du second sous-flux de données conformément à un ensemble ordonné d'actions de traitement pour traiter les données de communication dans une pile de protocoles conformément à la seconde instruction de commande reçue par l'émetteur-récepteur (32) ; et
l'émetteur-récepteur (32) est en outre configuré pour envoyer le second sous-flux de données que le processeur continue à traiter à un équipement utilisateur.

5. Seconde station de base selon la revendication 4, dans laquelle la seconde instruction de commande comprend : un identificateur utilisé pour identifier le second sous-flux de données ; et
l'émetteur-récepteur (32) est spécifiquement configuré pour :
recevoir, conformément à la seconde instruction de commande, un second sous-flux de données encapsulé envoyé par la première station de base, et désencapsuler le second sous-flux de données encapsulé en utilisant l'identificateur utilisé pour identifier le second sous-flux de données, pour obtenir un second sous-flux de données désencapsulé.

6. Seconde station de base selon la revendication 4, dans laquelle l'identificateur utilisé pour identifier le second sous-flux de données comprend l'un ou plusieurs parmi :
une adresse de protocole Internet, IP, de la seconde station de base, un port de protocole de datagramme utilisateur, UDP, de la seconde station de base, un identificateur de couche application de la seconde station de base, une indication de protocole de couche application de la seconde station de base, une étiquette de réseau local virtuel, VLAN, du second sous-flux de données, ou une étiquette de commutation multiprotocole par étiquette, MPLS, du second sous-flux de données.

7. Dispositif de commande comprenant :
une mémoire (41), un émetteur-récepteur (42) et un processeur (43), dans lequel la mémoire (41) est configurée pour stocker une instruction, et le processeur (43) est configuré pour exécuter l'instruction, qui comprend spécifiquement de :
générer une première instruction de commande et une seconde instruction de commande en fonction d'un identificateur d'un flux de données, de la qualité de canal d'un équipement utilisateur, d'une ressource de charge d'une première station de base et d'une ressource de charge d'une seconde station de base assistant la première station de base dans le traitement de données de liaison descendante, dans lequel la première instruction de commande comprend une politique de déchargement et est utilisée pour ordonner à la première station de base de décharger le flux de données, la politique de déchargement comprend des informations utilisées pour indiquer que le flux de données traité par un module de protocole de convergence de données par paquets, PDCP, est déchargé, et la seconde instruction de commande est utilisée pour ordonner à la seconde station de base de continuer à traiter un second sous-flux de données traité par un module PDCP dans la première station de base ;
l'émetteur-récepteur (42) est configuré pour envoyer la première instruction de commande générée par le processeur (43) à la première station de base, de sorte que la première station de base décharge le flux de données conformément à la politique de déchargement de la première instruction de commande ; et
l'émetteur-récepteur (42) est en outre configuré pour envoyer la seconde instruction de commande générée par le processeur (43) à la seconde station de base, de sorte qu'un module de commande de liaison radio, RLC, de la seconde station de base continue à traiter le second sous-flux de données du flux de données conformément à la seconde instruction de commande.

8. Dispositif de commande selon la revendication 7, dans lequel la première instruction de commande comprend en outre un ou plusieurs des éléments suivants :
un paramètre d'encapsulation utilisé pour encapsuler le second sous-flux de données du flux de données, ou l'identificateur du flux de données ; et
la seconde instruction de commande comprend un ou plusieurs des éléments suivants :
un identificateur utilisé pour identifier le second sous-flux de données du flux de données, une règle de traitement du module de protocole de commande de ressource radio, RLC, dans la seconde station de base, une règle de traitement d'un module de commande d'accès au support, MAC, dans la seconde station de base, ou des informations de qualité de service, QoS, du flux de données.

9. Première station de base, comprenant :
une mémoire (51), un émetteur-récepteur (52) et un processeur (53), dans laquelle la mémoire (51) est configurée pour stocker une instruction, et le processeur (53) est configuré pour exécuter l'instruction ;
l'émetteur-récepteur (52) est configuré pour recevoir une troisième instruction de commande générée par un contrôleur, dans laquelle la troisième instruction de commande comprend des informations utilisées pour indiquer que des sous-flux de données traités par un module de commande de liaison radio, RLC, sont convergés et sont utilisées pour ordonner à la première station de base d'effectuer un traitement de convergence sur un troisième sous-flux de données et un quatrième sous-flux de données ;
l'émetteur-récepteur (52) est en outre configuré pour recevoir, conformément à la troisième instruction de commande reçue, le quatrième sous-flux de données envoyé par une seconde station de base effectuant un traitement d'assistance, de sorte qu'un équipement utilisateur puisse effectuer une transmission de liaison montante vers de multiples stations de base, dans laquelle le quatrième sous-flux de données est un sous-flux de données traité par au moins un module RLC de la seconde station de base ; et
le processeur (53) est configuré pour faire converger, conformément à la troisième instruction de commande reçue par l'émetteur-récepteur (52), le troisième sous-flux de données et le quatrième sous-flux de données reçus par l'émetteur-récepteur (52), et continuer à traiter séquentiellement, par un module de protocole de convergence de paquets de données, PDCP, de la première station de base, des données de communication d'un flux de données convergé conformément à un ensemble ordonné d'actions de traitement pour traiter les données de communication dans une pile de protocoles, dans laquelle le troisième sous-flux de données est un sous-flux de données traité par au moins un module RLC de la première station de base.

10. Première station de base selon la revendication 9, dans laquelle la troisième instruction de commande comprend : un identificateur utilisé pour identifier le quatrième sous-flux de données ; et
l'émetteur-récepteur (52) est spécifiquement configuré pour :
recevoir, conformément à la troisième instruction de commande reçue, un quatrième sous-flux de données encapsulé envoyé par la seconde station de base, et effectuer un traitement de désencapsulation sur le quatrième sous-flux de données encapsulé en utilisant l'identificateur utilisé pour identifier le quatrième sous-flux de données, pour obtenir un quatrième sous-flux de données désencapsulé ; et/ou
la troisième instruction de commande comprend en outre : un identificateur du quatrième sous-flux de données et un identificateur du troisième sous-flux de données ; et
le processeur (53) est spécifiquement configuré pour :
faire converger le troisième sous-flux de données correspondant à l'identificateur du troisième sous-flux de données et le quatrième sous-flux de données correspondant à l'identificateur du quatrième sous-flux de données en fonction des informations utilisées pour indiquer que les sous-flux de données traités par le module RLC sont convergés.

11. Seconde station de base assistant une première station de base dans l'exécution d'un traitement, de sorte qu'un équipement utilisateur puisse effectuer une transmission de liaison montante vers de multiples stations de base, comprenant :
un émetteur-récepteur (61), configuré pour recevoir une quatrième instruction de commande générée par un contrôleur, dans lequel la quatrième instruction de commande comprend des informations utilisées pour indiquer que des sous-flux de données traités par un module de commande de liaison radio, RLC, sont convergés et sont utilisées pour ordonner à la seconde station de base d'envoyer un quatrième sous-flux de données traité par au moins un module RLC de la seconde station de base à la première station de base, dans laquelle
l'émetteur-récepteur (61) est en outre configuré pour envoyer le quatrième sous-flux de données à la première station de base conformément à la quatrième instruction de commande, de sorte que la première station de base effectue un traitement de convergence sur le quatrième sous-flux de données et un troisième sous-flux de données et un module de protocole de convergence de données par paquets, PDCP, de la première station de base continue à traiter séquentiellement des données de communication d'un flux de données convergé conformément à un ensemble ordonné d'actions de traitement pour traiter les données de communication dans une pile de protocoles, dans laquelle le troisième sous-flux de données est un sous-flux de données traité par au moins un module RLC de la première station de base.

12. Seconde station de base selon la revendication 11, dans laquelle la quatrième instruction de commande comprend en outre : un paramètre d'encapsulation utilisé pour encapsuler le quatrième sous-flux de données ;
l'émetteur-récepteur (61) est spécifiquement configuré pour : encapsuler le quatrième sous-flux de données en utilisant le paramètre d'encapsulation et en fonction des informations utilisées pour indiquer que les sous-flux de données traités par le module RLC sont convergés, et envoyer le quatrième sous-flux de données encapsulé à la première station de base ; et/ou
la quatrième instruction de commande comprend en outre : un identificateur du quatrième sous-flux de données ; et
l'émetteur-récepteur (61) est spécifiquement configuré pour :
envoyer le quatrième sous-flux de données correspondant à l'identificateur du quatrième sous-flux de données à la première station de base conformément à la quatrième instruction de commande reçue.

13. Dispositif de commande comprenant :
une mémoire (71), un émetteur-récepteur (72) et un processeur (73), dans lequel la mémoire (71) est configurée pour stocker une instruction, et le processeur (73) est configuré pour exécuter l'instruction, qui comprend spécifiquement de :
générer une troisième instruction de commande et une quatrième instruction de commande en fonction d'un identificateur d'un troisième sous-flux de données, d'un identificateur d'un quatrième sous-flux de données, de la qualité de canal d'un équipement utilisateur, d'une ressource de charge d'une première station de base et d'une ressource de charge d'une seconde station de base effectuant un traitement d'assistance, de sorte que l'équipement utilisateur puisse effectuer une transmission de liaison montante vers de multiples stations de base, dans lequel la troisième instruction de commande comprend des informations utilisées pour indiquer que des sous-flux de données traités par un module de commande de liaison radio, RLC, sont convergés et sont utilisées pour ordonner à la première station de base d'effectuer un traitement de convergence sur le troisième sous-flux de données et le quatrième sous-flux de données, et la quatrième instruction de commande comprend des informations utilisées pour indiquer que les sous-flux de données traités par un module RLC sont convergés et sont utilisées pour ordonner à la seconde station de base d'envoyer le quatrième sous-flux de données traité par au moins un module RLC de la seconde station de base à la première station de base ;
l'émetteur-récepteur (72) est configuré pour envoyer la quatrième instruction de commande générée par le processeur à la seconde station de base, de sorte que la seconde station de base envoie le quatrième sous-flux de données à la première station de base conformément à la quatrième instruction de commande ; et
l'émetteur-récepteur (72) est en outre configuré pour envoyer la troisième instruction de commande générée par le processeur à la première station de base, de sorte que la première station de base effectue un traitement de convergence sur le troisième sous-flux de données et le quatrième sous-flux de données conformément à la troisième instruction de commande et continue à traiter séquentiellement, par un module de protocole de convergence de données par paquets, PDCP, de la première station de base des données de communication d'un flux de données convergé conformément à un ensemble ordonné d'actions de traitement pour traiter les données de communication dans une pile de protocoles, dans lequel le troisième sous-flux de données est un sous-flux de données traité par au moins un module RLC de la première station de base.

14. Dispositif de commande selon la revendication 13, dans lequel la troisième instruction de commande comprend en outre un ou plusieurs des éléments suivants :
un identificateur utilisé pour identifier le quatrième sous-flux de données, l'identificateur du troisième sous-flux de données ou l'identificateur du quatrième sous-flux de données ; et
la quatrième instruction de commande comprend un ou plusieurs des éléments suivants :
un paramètre d'encapsulation utilisé pour encapsuler le quatrième sous-flux de données, ou l'identificateur du quatrième sous-flux de données.

15. Procédé de transmission à plusieurs flux, comprenant de :
recevoir, par une première station de base, une première instruction de commande générée par un contrôleur, dans lequel la première instruction de commande comprend une politique de déchargement et est utilisée pour ordonner à la première station de base de décharger un flux de données, la politique de déchargement comprend des informations utilisées pour indiquer que le flux de données traité par un module de protocole de convergence de données par paquets, PDCP, est déchargé et le flux de données est traité par au moins un module PDCP de la première station de base, puis déchargé ;
diviser, par la première station de base, le flux de données en au moins deux sous-flux de données conformément à la politique de déchargement de la première instruction de commande, continuer à traiter séquentiellement, par au moins un module de commande de liaison radio, RLC, de la première base station, des données de communication d'un sous-flux de données des au moins deux sous-flux de données selon un ensemble ordonné d'actions de traitement pour traiter les données de communication dans une pile de protocoles conformément à la première instruction de commande, et envoyer séparément un autre sous-flux de données des au moins deux sous-flux de données à une seconde station de base assistant la première station de base dans le traitement de données de liaison descendante, de sorte qu'un module RLC de la seconde station de base continue à traiter l'autre sous-flux de données ; et
envoyer, par la première station de base, le sous-flux de données que la première station de base continue de traiter à un équipement utilisateur.

16. Procédé selon la revendication 15, dans lequel la politique de déchargement comprend en outre des informations utilisées pour indiquer que le flux de données est déchargé selon une proportion et/ou une valeur absolue de trafic ou un débit d'un sous-flux de données acheminé par la première station de base et/ou une proportion et/ou une valeur absolue de trafic ou un débit d'un sous-flux de données acheminé par la seconde station de base ; et la division, par la première station de base, du flux de données en les au moins deux sous-flux de données conformément à la première instruction de commande comprend de :
diviser, par la première station de base, le flux de données en les au moins deux sous-flux de données en fonction de la proportion et/ou de la valeur absolue de trafic ou du débit d'un sous-flux de données acheminé par la première station de base et/ou de la proportion et/ou de la valeur absolue de trafic ou du débit du sous-flux de données acheminé par la seconde station de base de la politique de déchargement ; et/ou
la première instruction de commande comprend : un paramètre d'encapsulation utilisé pour encapsuler un second sous-flux de données ; et
l'envoi du second sous-flux de données à la seconde station de base comprend de :
encapsuler, par la première station de base, le second sous-flux de données conformément au paramètre d'encapsulation, et envoyer le second sous-flux de données encapsulé à la seconde station de base ; et/ou
la première instruction de commande comprend en outre :
un identificateur du flux de données ; et
la division, par la première station de base, du flux de données en les au moins deux sous-flux de données conformément à la première instruction de commande comprend de :
diviser, par la première station de base, le flux de données correspondant à l'identificateur du flux de données en les au moins deux sous-flux de données conformément à la première instruction de commande.

17. Procédé de transmission à plusieurs flux, comprenant de :
recevoir, par une première station de base, une troisième instruction de commande générée par un contrôleur, dans lequel la troisième instruction de commande comprend des informations utilisées pour indiquer que des sous-flux de données traités par un module de commande de liaison radio, RLC, sont convergés et sont utilisées pour ordonner à la première station de base d'effectuer un traitement de convergence sur un troisième sous-flux de données et un quatrième sous-flux de données ;
recevoir, par la première station de base, conformément à la troisième instruction de commande, le quatrième sous-flux de données envoyé par une seconde station de base effectuant un traitement d'assistance, de sorte qu'un équipement utilisateur puisse effectuer une transmission de liaison montante vers de multiples stations de base, dans lequel le quatrième sous-flux de données est un sous-flux de données traité par au moins un module RLC de la seconde station de base ; et
faire converger, par la première station de base, le troisième sous-flux de données et le quatrième sous-flux de données conformément à la troisième instruction de commande, et continuer à traiter séquentiellement, par un module de protocole de convergence de données par paquets, PDCP, de la première station de base, des données de communication d'un flux de données convergé conformément à un ensemble ordonné d'actions de traitement pour traiter les données de communication dans une pile de protocoles, dans lequel le troisième sous-flux de données est un sous-flux de données traité par au moins un module RLC de la première station de base.

18. Procédé selon la revendication 17, dans lequel la troisième instruction de commande comprend : un identificateur utilisé pour identifier le quatrième sous-flux de données ; et la réception, par la première station de base conformément à la troisième instruction de commande, du quatrième sous-flux de données envoyé par la seconde station de base comprend de :
recevoir, par la première station de base conformément à la troisième instruction de commande, un quatrième sous-flux de données encapsulé envoyé par la seconde station de base, et effectuer un traitement de désencapsulation sur le quatrième sous-flux de données encapsulé en utilisant l'identificateur utilisé pour identifier le quatrième sous-flux de données, pour obtenir un quatrième sous-flux de données désencapsulé ; et/ou
la troisième instruction de commande comprend en outre : un identificateur du quatrième sous-flux de données et un identificateur du troisième sous-flux de données ; et
la convergence, par la première station de base, du troisième sous-flux de données et du quatrième sous-flux de données conformément à la troisième instruction de commande, comprend de :
faire converger, par la première station de base, le troisième sous-flux de données correspondant à l'identificateur du troisième sous-flux de données et le quatrième sous-flux de données correspondant à l'identificateur du quatrième sous-flux de données en fonction des informations utilisées pour indiquer que les sous-flux de données traités par le module RLC sont convergés.
